# EUROPEAN PATENT APPLICATION

(11) **EP 4 694 054 A1**
(43) Date of publication of application: **11.02.2026**
(21) Application number: 24778011.7
(22) Date of filing: 26.03.2024
(51) Int. Cl.: H04L 41/0677

(54) **METHOD AND APPARATUS FOR ACQUIRING DEVICE ACCESS POSITION**

(30) Priority: 30.03.2023 CN 202310371599
(71) Applicant: Huawei Technologies Co., Ltd., Shenzhen, Guangdong 518129 (CN)
(72) Inventor: SHI, Danian, Shenzhen, Guangdong 518129 (CN); XIE, Yuming, Shenzhen, Guangdong 518129 (CN); ZHANG, Liang, Shenzhen, Guangdong 518129 (CN); WANG, Jun, Shenzhen, Guangdong 518129 (CN); DU, Dongjun, Shenzhen, Guangdong 518129 (CN)
(74) Representative: Pfenning, Meinig & Partner mbB
(86) International application number: PCT/CN2024/083830
(87) International publication number: WO 2024/199223

(57) **Abstract**

This application provides a device access location obtaining method and apparatus, and relates to the communication field. The method includes: receiving a mirrored packet sent by a network device, determining, based on the mirrored packet, whether a transmitter of a data packet is user equipment, and obtaining access location information of the user equipment in a network when it is determined that the transmitter of the data packet is user equipment. The mirrored packet is generated based on the data packet received by the network device, the data packet carries an identifier of the transmitter of the data packet, the mirrored packet carries the data packet or partial content of the data packet, an identifier of the network device, and a receive port identifier, and the access location information includes the identifier of the transmitter, the identifier of the network device, and the receive port identifier. In this application, the user equipment in the network is accurately located based on the mirrored packet, to obtain an access location of the user equipment.

## Description

This application claims priority to Chinese Patent Application No. 202310371599.9, filed with the China National Intellectual Property Administration on March 30, 2023 and entitled "DEVICE ACCESS LOCATION OBTAINING METHOD AND APPARATUS", which is incorporated herein by reference in its entirety.

### TECHNICAL FIELD

This application relates to the communication field, and in particular, to a device access location obtaining method and apparatus.

### BACKGROUND

In a large-scale communication system, an exception of application data transmission in the system may be caused by a network reason. Therefore, an administrator needs to locate and remove a fault. In a fault locating process, the administrator needs to obtain an access location of each user equipment in a network, and further determine a transmission path of an application data flow based on a network topology and the access location. The administrator may implement traffic monitoring at a key location on the transmission path of the application data flow, to obtain some specified parameters, and further locate the fault based on the obtained specified parameters. Therefore, how to accurately obtain an access location of user equipment in a network is one of key points.

### SUMMARY

This application provides a device access location obtaining method and apparatus, to accurately locate user equipment in a network, so as to obtain an access location of the user equipment.

According to a first aspect, this application provides a device access location obtaining method. The method includes: An apparatus receives a mirrored packet sent by a network device. The mirrored packet sent by the network device is generated by the network device based on a received data packet. In addition, the mirrored packet sent by the network device includes the data packet or partial content of the data packet, an identifier of the network device, and a receive port identifier. The receive port identifier carried in the mirrored packet indicates a receive port for the network device to receive the data packet, and the data packet in the mirrored packet or the partial content of the data packet in the mirrored packet includes an identifier of a transmitter of the data packet. Then, the apparatus determines, based on the received mirrored packet, whether the transmitter of the data packet is user equipment. If it is determined that the transmitter is user equipment, the apparatus obtains access location information of the user equipment in a network. The access location information includes the identifier of the transmitter, the identifier of the network device, and the receive port identifier.

In this way, in this application, an access location of the user equipment is obtained based on the mirrored packet, so that a system can obtain the access location of the user equipment in real time when the user equipment exchanges data with a device in the system, thereby improving real-time performance of obtaining the access location of the user equipment. In addition, this application provides a highly universal access location obtaining method, which may be applied to various networking scenarios, to meet requirements for real-time performance and accuracy of obtaining an access location in different networking scenarios. For example, in a terminal device migration scenario or the like, in this application, an access location of a device may be updated in time, to ensure real-time performance of an obtained access location of user equipment. In addition, in this application, the access location of the user equipment can be obtained only by transmitting the mirrored packet by the network device, and there is no need to transmit a large amount of interface data or the like, thereby effectively reducing communication overheads in the system and reducing bandwidth occupation.

For example, data exchange is performed between the network device and the transmitter of the data packet based on a wired connection.

For example, a receive port of the data packet may also be understood as a connection port between the network device and the transmitter of the data packet.

In a possible implementation, determining, based on the mirrored packet, whether the transmitter of the data packet is user equipment includes: The apparatus determines, based on the receive port identifier in the mirrored packet, whether the transmitter of the data packet is user equipment. In this way, in this application, the mirrored packet is extended, so that the mirrored packet can carry the receive port identifier. Correspondingly, the apparatus may determine, based on the receive port identifier carried in the mirrored packet, whether the transmitter connected to the corresponding receive port is user equipment. In this way, an access location obtaining solution applicable to scenarios of layer 2 and layer 3 data packet forwarding is provided, thereby implementing accurate locating of an access device of the user equipment, and further obtaining the access location of the user equipment.

In a possible implementation, determining, based on the mirrored packet, whether the transmitter of the data packet is user equipment includes: The apparatus determines, based on the identifier of the transmitter in the mirrored packet, whether the transmitter of the data packet is user equipment. In this way, a feature of the mirrored packet is used in this application, and a device type (that is, user equipment or non-user equipment) of the transmitter may be determined based on the identifier of the transmitter carried in the mirrored packet, so as to further obtain an access point of the user equipment when it is determined that the transmitter is user equipment.

In a possible implementation, a port type of the receive port is a user-side port type. In this way, in this application, a network device having a port of the user-side port type triggers a mirrored packet sending procedure only when the receive port of the user-side port type receives a data packet. When a remaining network device that does not have a port of the user-side port type receives a data packet, or a network device having a port of the user-side port type receives a data packet based on a receive port of a non-user-side port type, sending of a mirrored packet is not triggered, thereby effectively reducing a quantity of mirrored packet exchange times, reducing pressure of the network device, and further reducing communication overheads.

In a possible implementation, determining, based on the mirrored packet, whether the transmitter of the data packet is user equipment includes: The apparatus determines, in response to the received mirrored packet, that the transmitter of the data packet is user equipment. In this way, in this application, in a scenario in which a network device having a port of the user-side port type triggers a mirrored packet sending procedure only when the receive port of the user-side port type receives a data packet, after receiving the mirrored packet, the apparatus may determine that the transmitter of the mirrored packet is an access point of the user equipment, thereby effectively improving locating efficiency of the access point.

In a possible implementation, before the mirrored packet sent by the network device is received, the method further includes: The apparatus determines at least one network device in a network based on first information. The first information includes a port identifier of a port of each network device in the network and a corresponding port type, the port type includes the user-side port type and a network-device-side port type, and each of the at least one network device includes a port of the user-side port type. Then, the apparatus sends indication information to the at least one network device, where the indication information indicates each of the at least one network device to generate a mirrored packet based on a data packet received by the port of the user-side interface type of each network device. In this way, in this application, some ports of the user-side port type in the network may be determined in advance, and network devices to which these ports belong are indicated to serve as mirrored packet transmitters, so that a mirrored packet sending procedure is triggered only when these network devices receive a data packet based on the ports of the user-side port type. In this way, a quantity of mirrored packet exchange times is effectively reduced, pressure of the network device is reduced, and communication overheads are further reduced.

In a possible implementation, determining, based on the receive port identifier in the mirrored packet, whether the transmitter of the data packet is user equipment includes: The apparatus determines a port type of the receive port based on first information and the receive port identifier, where the first information includes a port identifier of a port of each network device in a network and a corresponding port type, and the port type includes a user-side port type and a network-device-side port type. If the port type of the receive port is the user-side port type, the apparatus determines that the transmitter is user equipment. If the port type of the receive port is the network-device-side port type, the apparatus determines that the transmitter is not user equipment. In this way, in this application, ports are classified in advance, so that when receiving the data packet, the network device determines the port type corresponding to the port that receives the data packet. Pre-classification may be understood as preliminary screening. In a preliminary screening phase, a port of the network-device-side port type may be determined, and a device connected to a port of the user-side port type may be user equipment, or may be non-user equipment (for example, a network device in a non-observation range), or the port of the user-side port type may be an empty port. Correspondingly, the apparatus may further determine, based on the received mirrored packet, which port in user-side ports is specifically connected to a neighbor device that is user equipment, so as to accurately locate the user equipment and further obtain a corresponding access location.

In a possible implementation, before the mirrored packet sent by the network device is received, the method further includes: The apparatus obtains second information, where the second information includes identifiers of a plurality of network devices in the network. Then, the apparatus obtains neighbor information of each of the plurality of network devices, where each piece of neighbor information includes an identifier of a source network device, a source network device port identifier, and an identifier of a neighbor device, the source network device is a device that sends the neighbor information, the neighbor device is a device physically connected to the source network device, and the source network device port identifier indicates a port that is of the source network device and that is connected to the neighbor device. Subsequently, the apparatus determines a port type of a port of each network device based on the second information and the neighbor information, where an identifier of a neighbor device connected to a port whose port type is the network-device-side port type is included in the second information, and an identifier of a neighbor device connected to a port whose port type is the user-side port type is not included in the second information. In this way, in this application, based on the preset network device identifier, it may be determined that the device type of the neighbor device connected to the network device is a network device type or a non-network device type. The non-network device may include user equipment, or may be another device (for example, a network device in a non-observation range). The apparatus may further determine, based on the received mirrored packet, which port in user-side ports is specifically connected to a neighbor device that is user equipment, so as to accurately locate the user equipment and further obtain a corresponding access location.

In a possible implementation, receiving a mirrored packet sent by a network device includes: The apparatus receives a plurality of mirrored packets, where the plurality of mirrored packets are from one or more network devices. The identifier of the transmitter includes an IP address of the transmitter and a MAC address of the transmitter, and determining, based on the identifier of the transmitter in the mirrored packet, whether the transmitter of the data packet is user equipment includes: if transmitter IP addresses carried in N mirrored packets in the plurality of mirrored packets are the same, none of transmitter MAC addresses carried in the N mirrored packets is included in second information, and network device identifiers carried in the N mirrored packets indicate a same network device, determining that the transmitter is user equipment, where the second information includes identifiers of a plurality of network devices in a network. In this way, in a layer 3 forwarding scenario in this application, if transmitters of a plurality of packets are non-network devices, and corresponding mirrored packets are from a same network device, it may be determined that the corresponding transmitters are user equipment. In this application, the access point of the user equipment in the network can be accurately located with reference to the identifier of the transmitter and distribution of the mirrored packet, so as to obtain the access location information corresponding to the user equipment.

For example, the plurality of mirrored packets may be sent by a same network device. The plurality of mirrored packets may be generated based on a plurality of data packets sent by one user equipment connected to the network device, or the plurality of mirrored packets may be generated based on a plurality of packets sent by a plurality of user equipments connected to the network device.

In a possible implementation, determining, based on the identifier of the transmitter in the mirrored packet, whether the transmitter of the data packet is user equipment further includes: if transmitter IP addresses carried in M mirrored packets in the plurality of mirrored packets are the same, none of transmitter MAC addresses carried in the M mirrored packets is included in the second information, and network device identifiers carried in the M mirrored packets indicate two or more network devices, determining, based on the receive port identifier in the mirrored packet, whether the transmitter of the data packet is user equipment. In this way, in this application, two different determining manners are combined, so that locating accuracy of the user equipment can be effectively improved, to avoid a problem of inaccurate fault locating caused by incorrect determining.

In a possible implementation, the method further includes: The apparatus queries user equipment access information based on the identifier of the transmitter, where the user equipment access information includes access location information of at least one user equipment. If the user equipment access information includes access location information of user equipment corresponding to the identifier of the transmitter, and stored access location information is inconsistent with the currently obtained access location information, the apparatus updates the access location information that is of the user equipment corresponding to the identifier of the transmitter and that is in the user equipment access information. In this way, in this application, an update status of the access location of the user equipment may be recorded, so that during fault locating, an operation and maintenance engineer can obtain more fault information, thereby improving accuracy of fault locating.

For example, when storing the access location information of the user equipment, the apparatus may further correspondingly store access location obtaining time. The obtaining time may be time at which the access location is obtained, or may be time at which the access location is stored.

In a possible implementation, determining, based on the mirrored packet, whether the transmitter of the data packet is user equipment includes: The apparatus determines, based on the receive port identifier and the identifier of the transmitter in the mirrored packet, whether the transmitter of the data packet is user equipment. If a determining result based on the receive port identifier indicates that the transmitter is user equipment, and a determining result based on the identifier of the transmitter indicates that the transmitter is not user equipment, it is determined that the transmitter is not user equipment. In this way, in this application, two different determining manners are combined, so that locating accuracy of the user equipment can be effectively improved, to avoid a problem of inaccurate fault locating caused by incorrect determining.

In a possible implementation, the data packet carries transport layer control information or application layer control information. In this way, the network device in this application triggers a mirrored packet sending procedure based on a special (or specified) data packet, so that a quantity of mirrored packet sending times can be effectively reduced, thereby reducing network overheads. In addition, in a migration or new access scenario of the user equipment, corresponding control information is sent, and the network device correspondingly triggers a mirrored packet sending procedure, so that the apparatus can obtain the access location of the user equipment, thereby reducing network overheads and ensuring real-time performance of obtaining the access location of the user equipment.

In a possible implementation, the data packet is a tunnel packet, and the identifier of the transmitter is carried in an inner packet of the tunnel packet. In this way, this application may be applied to a transmission scenario of a tunnel data packet, that is, corresponding to user equipment such as a virtual machine that accesses the system by using a tunnel protocol, which may also be accurately located.

In a possible implementation, the user equipment is a server, a terminal device, or a virtual machine.

In a possible implementation, the mirrored packet is an encapsulated remote switched port analyzer ERPAN packet.

According to a second aspect, this application provides a device access location obtaining apparatus. The apparatus includes a receiving unit and an access location obtaining unit. The receiving unit is configured to receive a mirrored packet sent by a network device. The mirrored packet is generated by the network device based on a received data packet, the mirrored packet includes the data packet or partial content of the data packet, an identifier of the network device, and a receive port identifier, the data packet in the mirrored packet or the partial content of the data packet in the mirrored packet includes an identifier of a transmitter of the data packet, and the receive port identifier indicates a receive port for the network device to receive the data packet. The access location obtaining unit is configured to determine, based on the mirrored packet, whether the transmitter of the data packet is user equipment. The access location obtaining unit is configured to obtain access location information of the user equipment if it is determined that the transmitter is user equipment, where the access location information includes the identifier of the transmitter, the identifier of the network device, and the receive port identifier.

In a possible implementation, the access location obtaining unit is specifically configured to determine, based on the receive port identifier in the mirrored packet, whether the transmitter of the data packet is user equipment.

In a possible implementation, the access location obtaining unit is specifically configured to determine, based on the identifier of the transmitter in the mirrored packet, whether the transmitter of the data packet is user equipment.

In a possible implementation, a port type of the receive port is a user-side port type.

In a possible implementation, the access location obtaining unit is specifically configured to determine, in response to the received mirrored packet, that the transmitter of the data packet is user equipment.

In a possible implementation, the apparatus further includes an analysis unit, configured to: determine at least one network device in a network based on first information, where the first information includes a port identifier of a port of each network device in the network and a corresponding port type, the port type includes the user-side port type and a network-device-side port type, and each of the at least one network device includes a port of the user-side port type; and send indication information to the at least one network device, where the indication information indicates each of the at least one network device to generate a mirrored packet based on a data packet received by the port of the user-side interface type of each network device.

In a possible implementation, the access location obtaining unit is specifically configured to: determine a port type of the receive port based on first information and the receive port identifier, where the first information includes a port identifier of a port of each network device in a network and a corresponding port type, and the port type includes a user-side port type and a network-device-side port type; and if the port type of the receive port is the user-side port type, determine that the transmitter is user equipment; or if the port type of the receive port is the network-device-side port type, determine that the transmitter is not user equipment.

In a possible implementation, the apparatus further includes the analysis unit, specifically configured to: obtain second information, where the second information includes identifiers of a plurality of network devices in the network; obtain neighbor information of each of the plurality of network devices, where each piece of neighbor information includes an identifier of a source network device, a source network device port identifier, and an identifier of a neighbor device, the source network device is a device that sends the neighbor information, the neighbor device is a device physically connected to the source network device, and the source network device port identifier indicates a port that is of the source network device and that is connected to the neighbor device; and determine a port type of a port of each network device based on the second information and the neighbor information, where an identifier of a neighbor device connected to a port whose port type is the network-device-side port type is included in the second information, and an identifier of a neighbor device connected to a port whose port type is the user-side port type is not included in the second information.

In a possible implementation, the receiving unit is specifically configured to: receive a plurality of mirrored packets, where the plurality of mirrored packets are from one or more network devices; and the identifier of the transmitter includes an IP address of the transmitter and a MAC address of the transmitter, and the analysis unit is specifically configured to: if transmitter IP addresses carried in N mirrored packets in the plurality of mirrored packets are the same, none of transmitter MAC addresses carried in the N mirrored packets is included in second information, and network device identifiers carried in the N mirrored packets indicate a same network device, determine that the transmitter is user equipment, where the second information includes identifiers of a plurality of network devices in a network.

In a possible implementation, the access location obtaining unit is specifically configured to: if transmitter IP addresses carried in M mirrored packets in the plurality of mirrored packets are the same, none of transmitter MAC addresses carried in the M mirrored packets is included in the second information, and network device identifiers carried in the M mirrored packets indicate two or more network devices, determine, based on the receive port identifier in the mirrored packet, whether the transmitter of the data packet is user equipment.

In a possible implementation, the access location obtaining unit is specifically configured to: determine, based on the receive port identifier and the identifier of the transmitter in the mirrored packet, whether the transmitter of the data packet is user equipment; and if a determining result based on the receive port identifier indicates that the transmitter is user equipment, and a determining result based on the identifier of the transmitter indicates that the transmitter is not user equipment, determine that the transmitter is not user equipment.

In a possible implementation, the apparatus further includes: an access location storage unit, configured to query user equipment access information based on the identifier of the transmitter, where the user equipment access information includes access location information of at least one user equipment; and the access location storage unit is further configured to: if the user equipment access information includes access location information of user equipment corresponding to the identifier of the transmitter, and stored access location information is inconsistent with the currently obtained access location information, update the access location information that is of the user equipment corresponding to the identifier of the transmitter and that is in the user equipment access information.

In a possible implementation, the data packet carries transport layer control information or application layer control information.

In a possible implementation, the data packet is a tunnel packet, and the identifier of the transmitter is carried in an inner packet of the tunnel packet.

In a possible implementation, the user equipment is a server, a terminal device, or a virtual machine.

In a possible implementation, the mirrored packet is an encapsulated remote switched port analyzer ERPAN packet.

The second aspect and any implementation of the second aspect are respectively corresponding to the first aspect and any implementation of the first aspect. For technical effects corresponding to the second aspect and any implementation of the second aspect, refer to the technical effects corresponding to the first aspect and any implementation of the first aspect. Details are not described herein again.

According to a third aspect, this application provides a computer-readable medium, configured to store a computer program. The computer program includes instructions used to perform the method in the first aspect or any possible implementation of the first aspect.

According to a fourth aspect, this application provides a computer program. The computer program includes instructions used to perform the method in the first aspect or any possible implementation of the first aspect.

According to a fifth aspect, this application provides a chip. The chip includes a processing circuit and a transceiver pin. The transceiver pin and the processing circuit communicate with each other by using an internal connection path, and the processing circuit performs the method in any one of the first aspect or the possible implementations of the first aspect, to control a receiving pin to receive a signal, and control a sending pin to send a signal.

### BRIEF DESCRIPTION OF DRAWINGS

FIG. 1 is an example diagram of a structure of a communication system;
FIG. 2 is an example diagram of packet transmission in a virtual environment;
FIG. 3 is an example schematic flowchart of a device access location obtaining method;
FIG. 4 is an example diagram of a structure of a communication system;
FIG. 5a is an example diagram of a structure of a data packet;
FIG. 5b is an example diagram of a structure of a mirrored packet;
FIG. 6a is an example diagram of a structure of a data packet;
FIG. 6b is an example diagram of a structure of a mirrored packet;
FIG. 7 is an example diagram of an application scenario;
FIG. 8 is an example schematic flowchart of a device access location obtaining method;
FIG. 9a is an example diagram of packet processing;
FIG. 9b is an example diagram of packet processing;
FIG. 9c is an example diagram of packet processing;
FIG. 10 is an example diagram of packet processing;
FIG. 11 is an example schematic flowchart of a device access location obtaining method;
FIG. 12 is an example diagram of a mirrored packet transmission process;
FIG. 13 is an example diagram of packet processing;
FIG. 14 is an example diagram of a structure of a mirrored packet;
FIG. 15 is an example diagram of an application scenario;
FIG. 16 is an example diagram of an application scenario;
FIG. 17 is an example diagram of a structure of an apparatus; and
FIG. 18 is an example diagram of a structure of an apparatus.

### DESCRIPTION OF EMBODIMENTS

The following clearly and completely describes the technical solutions in embodiments of this application with reference to the accompanying drawings in embodiments of this application.

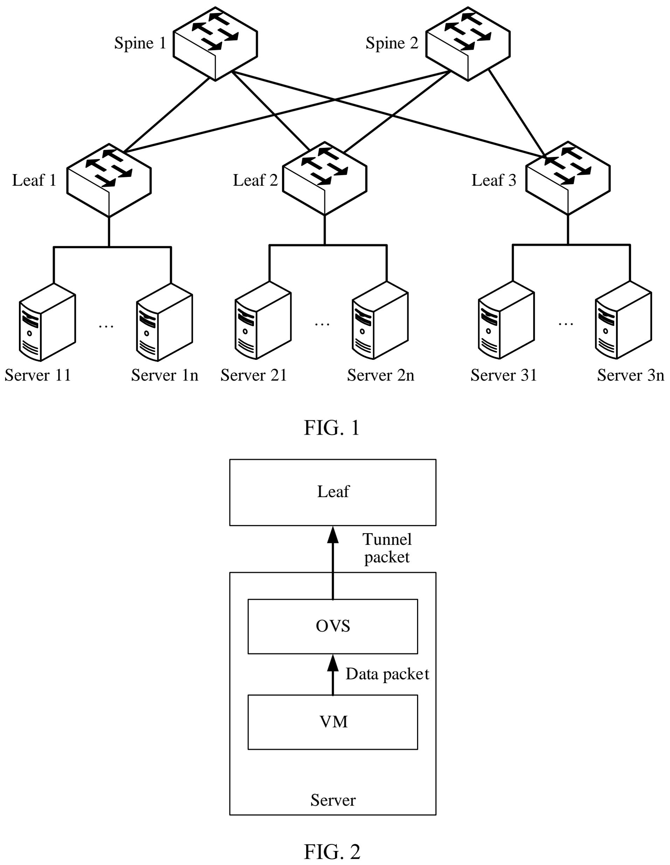

First, before technical solutions in embodiments of this application are described, a communication system in embodiments of this application is described by using an example with reference to a diagram of a structure of a communication system (which may also be referred to as a communication network or the like, where this is not limited in this application) shown in FIG. 1. Refer to FIG. 1. The communication system includes but is not limited to spine 1 (spine), spine 2, leaf 1 (leaf), leaf 2, leaf 3, and a plurality of user equipments.

A spine (including spine 1 and spine 2) may be a network device such as a switch or a router. A leaf (including leaf 1, leaf 2, and leaf 3) may be a network device such as a switch or a router.

In embodiments of this application, each network device (including the spine and the leaf) may provide one or more interfaces (which may also be referred to as ports, transceiver interfaces, or the like, where this is not limited in this application). The interface of the network device may be used for a connection (which means a physical connection, that is, a connection via a physical link, where a connection relationship described in embodiments of this application is a physical direct connection unless otherwise specified, and no repeated description is provided below) to another device.

For example, devices that are interconnected (directly connected) in the system may be referred to as neighbor devices. For example, in the communication system shown in FIG. 1, a connection relationship between the devices includes but is not limited to: Spine 1 is connected to leaf 1, leaf 2, and leaf 3. Spine 2 is connected to leaf 1, leaf 2, and leaf 3. Leaf 1 is connected to server 11 to server 1n, leaf 2 is connected to server 21 to server 2n, and leaf 3 is connected to server 31 to server 3n. Correspondingly, neighbor devices of leaf 1 include but are not limited to server 11 to server 1n and spine 1. In this scenario, neighbor devices of spine 1 include but are not limited to leaf 1, leaf 2, and leaf 3. Neighbor devices of leaf 1 include but are not limited to spine 1, spine 2, and server 11 to server 1n. For a neighbor device of another device, refer to the foregoing description, and examples are not described herein one by one.

In FIG. 1, there is a communication connection between server 11 and spine 1 (that is, there is a communication link between server 11 and spine 1 that may be used for data exchange), and data exchange may be performed by using the communication connection. However, because server 11 and spine 1 are not physically directly connected, the two devices are not neighbor devices.

In embodiments of this application, the communication system shown in FIG. 1 may be located in a data center. In another embodiment, the communication system shown in FIG. 1 may be alternatively located in an application scenario such as a campus, a shopping mall, a supermarket, a large-scale enterprise, or an operator. This is not limited in this application.

It should be noted that in embodiments of this application, a leaf-spine network architecture (which may also be represented as Spine-Leaf) in FIG. 1 is used as an example for description. In another embodiment, the solutions in embodiments of this application may be further applied to any network architecture such as a conventional network architecture. This is not limited in this application.

It should be further noted that a quantity of devices in the system shown in FIG. 1 is merely an example, and in actual application, fewer or more devices may be included. This is not limited in this application.

It should be further noted that the connection relationship between the devices shown in FIG. 1 is also an example, and in actual application, the connection relationship may be set based on a scenario requirement. This is not limited in this application.

In embodiments of this application, a device type in a communication system may include but is not limited to a network device (which may also be referred to as a network device type) and user equipment (which may also be referred to as a user equipment type). Optionally, the network device may be understood as a general term of all devices on a network side, and the network device may be configured to provide a network function such as data forwarding. For example, devices such as spine 1, spine 2, leaf 1, leaf 2, and leaf 3 in FIG. 1 are network devices. The user equipment may be understood as a general term of all devices on a user side. The user equipment may provide a user with a function such as an application service, for example, server 11 to server 1n and server 21 to server 2n in FIG. 1.

In embodiments of this application, an example in which the user equipment is a server is used for description. In another embodiment, the user equipment may alternatively be a device that can access a system by using a wired connection, such as a terminal device (for example, a computer, a tablet, a mobile phone, a wearable device, a smart home device, or an in-vehicle device), or a virtual terminal (for example, a virtual machine). This is not limited in this application.

In embodiments of this application, a network device configured to connect to user equipment may also be referred to as a border device, or referred to as an access point of the user equipment. For example, the user equipment accesses a network through the access point, to exchange data with another device in the network. In embodiments of this application, the access point of the user equipment may be understood as a network device that has a shortest distance (which may be understood as a distance of a physical connection path, or may be understood as a communication distance, a transmission path distance, or the like) to the user equipment in known network devices in a system. For example, still refer to FIG. 1. Leaf 1 is an access point of server 11. Correspondingly, server 11 accesses the communication system by accessing leaf 1, to exchange data with another device in the communication system.

The "known network devices" described above may also be referred to as network devices within an observation range, that is, network devices preconfigured in the network, and may also be understood as that an administrator knows that the foregoing devices are all network devices, or may be understood as manageable network devices. No repeated description is provided below. Correspondingly, there are some "unknown network devices" in embodiments of this application. Such a network device may be understood as a network device that is not configured in the system, or may be understood as an unmanageable network device. A specific scenario is described in detail below.

For example, an operating system may be deployed in user equipment, and one or more applications or modules may be deployed in the operating system. An application in the user equipment may generate a data packet (which may also be referred to as a data packet) in response to a user operation (which may alternatively be a locally stored instruction). Application data is carried in the data packet. The user equipment (which may also be referred to as an initial transmitter in embodiments of this application) sends the data packet to a network device (briefly referred to as an access point below) that serves as an access point of the user equipment. The access point may forward the data packet, to transmit the data packet to a target device (which may also be referred to as an end receiver in embodiments of this application). A transmission path of the data packet may further include one or more other network devices.

In an existing technology, using a campus scenario as an example, a terminal access network authentication mechanism is usually applied in a communication system. An access point identifies identity information of user equipment, and sends the identity information to an authentication server for identity authentication. The user equipment can access a network only when the identity authentication succeeds. In this example, access information of the user equipment may be obtained from each access point. However, in a relatively closed network, for example, a data center network, an authentication system is usually not deployed. Therefore, in an application scenario in which no authentication system is deployed, an access location of the user equipment cannot be obtained in the foregoing manner. To accurately obtain the access location of the user equipment, the existing technology further provides an access location obtaining method. In the internet protocol version 4 (Internet Protocol version 4, IPv4), when any user equipment needs to communicate with other user equipment, the user equipment needs to first obtain a link layer address of a destination device by using the address resolution protocol (Address Resolution Protocol, ARP). In the internet protocol version 6 (Internet Protocol version 6, IPv6), a link layer address needs to be obtained by using the neighbor discovery protocol (Neighbor Discovery Protocol, NDP). Correspondingly, in this example, a system may regularly (or periodically) collect an ARP entry or an ND (Neighbor Discovery) entry on an edge switch, to obtain an access location of the user equipment. The ARP entry is used as an example. For example, the ARP entry includes but is not limited to: an internet protocol (Internet Protocol, IP) address of a local device interface, an IP address of accessed user equipment, a medium access control (Medium Access Control, MAC) address of the local device interface, a MAC address of the accessed user equipment, and the like.

However, an application scenario of the foregoing manner is limited. For example, as shown in FIG. 2, in this scenario, a virtual machine (Virtual Machine, VM) is deployed in user equipment (for example, a server), and the VM generates a data packet and sends the data packet to an open virtual switch (Open virtual Switch, OVS). The OVS encapsulates the data packet sent by the VM, to generate a tunnel packet. The tunnel packet may comply with the virtual extensible local area network (Virtual eXtensible Local Area Network, VXLAN) protocol (or another tunnel protocol, which is not limited in this application). The OVS sends the tunnel packet to a leaf. The leaf can obtain only an IP address and a MAC address of a tunnel between the leaf and the server. However, the leaf cannot obtain a VM-related ARP entry or ND entry because the leaf does not directly perform protocol interaction with the VM. As a result, the leaf cannot accurately obtain an access location of the VM.

In addition, in a manner of obtaining the access location of the user equipment based on the ARP entry or the ND entry, when the access location is obtained, a quantity of obtained ARP entries or ND entries is equal to a quantity of user equipments included in the system. If the access location is determined by periodically obtaining ARP entries or ND entries, communication load and processing load (for example, processor load) of each device increase if duration of a collection period is set to be short. If the duration of the period is set to be long, a change scenario such as user equipment migration in the system may not be responded in time, and consequently an incorrect access location is obtained.

For an application scenario in which a VM exists, the existing technology further provides an access location obtaining manner. An attachment relationship between a VM and a physical machine (for example, a server in FIG. 2) may be obtained by using a cloud platform, so that when an access location of the server is obtained on a leaf, an access location of the VM in a communication system may be further obtained based on the obtained attachment relationship. However, this method depends on the cloud platform to invoke an interface for obtaining the attachment relationship to obtain the attachment relationship. However, the VM has a plurality of implementations. For example, some VMs are based on an openstack architecture, and some VMs are based on a cloudstack architecture. As a result, the cloud platform needs to perform customized development for each VM implementation to support different interfaces for obtaining an attachment relationship, and implementation costs of the cloud platform are relatively high.

In view of this, embodiments of this application provide a device access location obtaining method. In the method, a system locates user equipment by using a mirrored packet, to obtain an access location of the user equipment. Therefore, an access location obtaining method that is easy to implement and has strong real-time performance is implemented.

In embodiments of this application, an analysis unit, an access location obtaining unit, and an access location storage unit are deployed in a communication system. The analysis unit, the access location obtaining unit, and the access location storage unit may be deployed on a same device (for example, a server), or may be deployed on different devices. This is not limited in this application. If the analysis unit, the access location obtaining unit, and the access location storage unit are deployed on different devices, servers deployed with the foregoing units may communicate with each other (which may be directly connected or may be indirectly connected, where this is not limited in this application), to implement exchange of access location-related information between the units. Optionally, a device (for example, a server) to which the analysis unit, the access location obtaining unit, and the access location storage unit belong may alternatively be deployed outside a communication system (for example, the communication system shown in FIG. 1). In this scenario, one or more devices deployed with the analysis unit, the access location obtaining unit, and the access location storage unit communicate with each other, and may communicate with each device in the communication system.

In embodiments of this application, an example in which the analysis unit, the access location obtaining unit, and the access location storage unit are deployed on a same server (for example, server 22) is used for description.

In a possible implementation, one or more servers deployed with the analysis unit, the access location obtaining unit, and the access location storage unit are connected to a leaf, to access the communication system, so as to exchange data with another device. Optionally, the leaf connected to the one or more servers deployed with the analysis unit, the access location obtaining unit, and the access location storage unit may be any leaf in the system. Optionally, the leaf connected to the one or more servers deployed with the analysis unit, the access location obtaining unit, and the access location storage unit may alternatively be a dedicated leaf of such a server. It may be understood that the dedicated leaf is configured to forward packets of the analysis unit, the access location obtaining unit, and the access location storage unit, and does not need to transmit another application packet, thereby improving an exchange rate of information (or parameters) in an access location obtaining process, to further improve access location obtaining and storage efficiency.

For example, the analysis unit may be configured to obtain device information in the communication system, or may be understood as being configured to obtain a related parameter required for analyzing the access location of the user equipment, for example, including but not limited to an identifier of a network device and an interface identifier of the network device. Optionally, the identifier of the network device includes but is not limited to one of the following: an ID of the network device, a MAC address of the network device, an IP address of the network device, and the like.

In an example, the analysis unit performs analysis processing based on the obtained device information to determine a device type of a device in the system, where the device type includes a network device type and a non-network device type (which may also be referred to as a user equipment type). The analysis unit transmits an analysis result to the access location obtaining unit. Correspondingly, the access location obtaining unit may further parse a received mirrored packet based on the analysis result of the analysis unit, to locate user equipment in a non-network device indicated in the analysis result, further obtain an access location of the user equipment, and store the access location of the user equipment in the access location storage unit. It may be understood that, in this example, the analysis unit may perform preliminary screening based on the device information, to exclude a network device, that is, to select a device that is a non-network device (specifically, a network device in a non-observation range). In this example, the non-network device may include user equipment, or may include some unknown devices, that is, an accurate type of the device is temporarily not determined through preliminary screening. The access location obtaining unit may perform further refined screening based on the analysis result of the analysis unit, to obtain an accurate locating result of the user equipment.

In another example, the analysis unit outputs the obtained device information to the access location obtaining unit. The access location obtaining unit may obtain the access location of the user equipment based on the received mirrored packet and the obtained device information, and store the access location of the user equipment in the access location storage unit.

For example, the access location storage unit is configured to store an access location of each user equipment that is input by the access location obtaining unit. Optionally, the access location storage unit stores the access location of each user equipment in a form of a list. For example, access location information received by the access location storage unit includes but is not limited to: an identifier of the user equipment and the access location of the user equipment. Optionally, the identifier of the user equipment is an IP address of the user equipment, and the access location of the user equipment includes but is not limited to at least one of the following: an identifier of a network device accessed by the user equipment, a port identifier of a port of the network device accessed by the user equipment, and the like.

In embodiments of this application, the user equipment and the access point may be physically directly connected. In some examples, there may be another device between the user equipment and the access point. For example, a VM is indirectly connected to a network device (for example, a leaf) accessed by the VM, and a server to which the VM belongs is directly connected to the access point. For another example, the user equipment may be connected to a known network device in the system by using a device such as some private routers (which may be referred to as unknown network devices or network devices in a non-observation range in embodiments of this application). In other words, although a device type of the unknown network device is also network device, the unknown network device is a network device in a non-observation range in the system in embodiments of this application. The access point in embodiments of this application is a network device in an observation range. In other words, the access point may be further understood as a network device in an observation range closest to the user equipment.

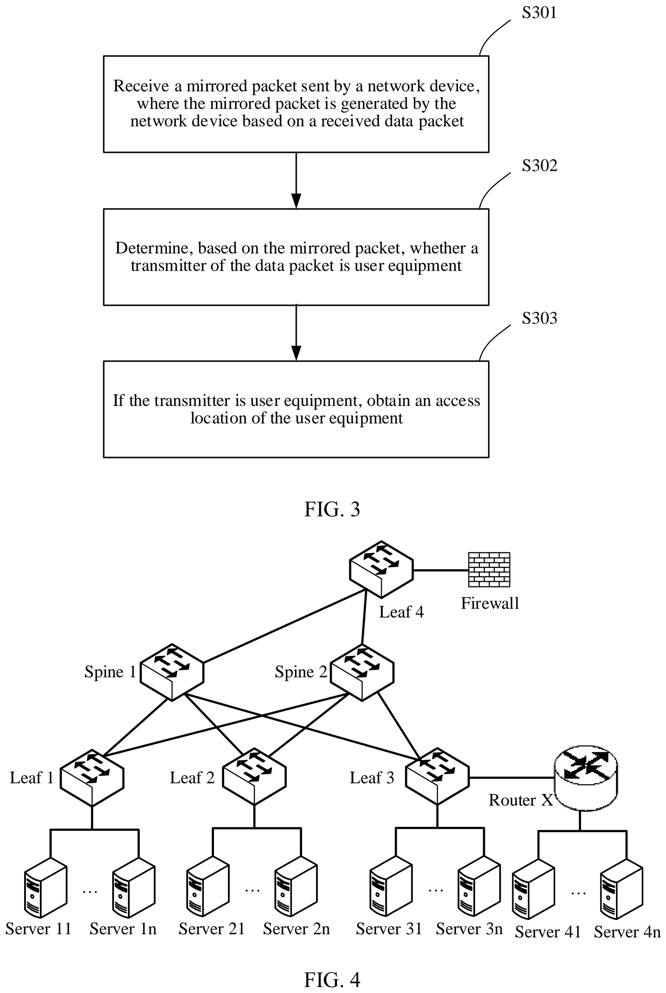

The following describes in detail a device access location obtaining method in embodiments of this application with reference to the accompanying drawings. FIG. 3 is a schematic flowchart of a device access location obtaining method according to an embodiment of this application. Refer to FIG. 3. Specific steps include but are not limited to steps S301 to S303.

S301: Receive a mirrored packet sent by a network device, where the mirrored packet is generated by the network device based on a received data packet.

In embodiments of this application, mirrored packet configuration may be performed on at least one network device in a system, so that after receiving a data packet, the at least one network device generates a mirrored packet based on the data packet, and sends the generated mirrored packet to a device to which an analysis unit belongs. The at least one network device configured to send the mirrored packet may be referred to as a mirrored packet transmitter in embodiments of this application.

In a possible implementation, the at least one network device serving as the mirrored packet transmitter may be all known network devices that have a packet mirroring function in the system. In embodiments of this application, a known network device may also be referred to as a network device in an observation range. In addition, a network device having the packet mirroring function is a network device that can encapsulate a data packet according to a mirrored packet protocol. For example, FIG. 1 is used as an example. Spine 1, spine 2, leaf 1, leaf 2, and leaf 3 in FIG. 1 are all preconfigured network devices. In this scenario, an administrator may perform, through a management device (for example, a terminal device like a computer or a tablet), connection to a management interface provided by each network device, to implement packet mirroring function configuration on each network device, so that the network device serves as a mirrored packet transmitter. For another example, as described above, the at least one network device is all known network devices in the system, and the system may further include some private network devices, which may also be understood as network devices in a non-observation range. A diagram of a structure of a system shown in FIG. 4 is used as an example. In FIG. 4, leaf 4 is connected to spine 1, spine 2, and a firewall (the other side of the firewall may be connected to another network device), router X is connected to leaf 3, and router X is connected to a plurality of servers (for example, server 41 to server 4n) (for descriptions of other devices, refer to FIG. 1, and details are not described herein again). In this example, both the firewall and router X are network devices in a non-observation range. It may be understood that an operation and maintenance engineer cannot manage and configure router X and the firewall. Optionally, router X may also be referred to as a user-side network device. Because router X is an unknown network device (that is, a network device in the non-observation range), the administrator does not perform packet mirroring function configuration for router X. Correspondingly, after receiving a data packet, router X does not generate a mirrored packet.

It should be noted that the mirrored packet in embodiments of this application is a mirrored packet having a specified feature described in embodiments of this application. In another embodiment, mirrored packet configuration may be performed on router X, but a mirrored packet sent by router X is a mirrored packet that meets a requirement in another scenario, and is not the mirrored packet described in embodiments of this application (which may also be understood as a mirrored packet that can be used to locate user equipment).

It should be further noted that, as described above, because there may be some unknown network devices in the network, a "non-network device" in embodiments of this application may be understood as a network device in the non-observation range. For example, the device may be user equipment, or may be an unknown network device.

In another possible implementation, the at least one network device serving as the mirrored packet transmitter may be a specified network device in the system. Optionally, the specified network device may be a network device having a port of a user-side port type. In embodiments of this application, ports of the network device may be classified into the user-side port type and a network-side port type. A neighbor device connected to a port of the network-side port type is a network device in the observation range described above. A neighbor device connected to a port of the user-side port type is a device in the non-observation range. The device in the non-observation range may be user equipment, or may be a network device in the non-observation range. For example, the firewall and router X in FIG. 4 are network devices in the non-observation range, which may be briefly referred to as unknown network devices. That is, in this example, the network device having the port of the user-side port type is configured as a mirrored packet transmitter.

Specifically, in embodiments of this application, the analysis unit may obtain an identifier of each network device in the observation range in the system. The identifier of the network device includes but is not limited to at least one of the following: an ID of the network device, a MAC address of the network device, an IP address of the network device, a management address of the network device, and the like. This is not limited in this application. The identifier of each network device obtained by the analysis unit may be preconfigured by the administrator. For example, FIG. 1 is used as an example. The analysis unit pre-stores a network device identifier list (a list manner is used as an example in this embodiment of this application, and another form may be used in another embodiment, which is not limited in this application). The list includes identifiers of all known network devices in the system. For example, the network device identifier list includes but is not limited to an identifier of spine 1, an identifier of spine 2, an identifier of leaf 1, an identifier of leaf 2, and an identifier of leaf 3. In other words, device types of spine 1, spine 2, leaf 1, leaf 2, and leaf 3 are all determined as network devices, that is, network devices in the observation range.

For example, the analysis unit may collect neighbor information from a network device side in each observation range. Specifically, according to the link layer discovery protocol (Link Layer Discovery Protocol, LLDP), each network device obtains LLDP information of the network device. The LLDP information includes but is not limited to: a local port identifier (that is, a port identifier of a port used by the local network device to connect to a neighbor device), a peer device identifier (that is, an identifier of the neighbor device connected to the local network device), a peer device port identifier (that is, an identifier of an interface used by the neighbor device to connect to the local network device), and the like.

Optionally, each network device may periodically send an LLDP packet to a neighbor device. The LLDP packet includes but is not limited to: an identifier of the local device, a port identifier (that is, an identifier of a port sending the LLDP packet), a packet type, and the like. Each network device may update, based on a received LLDP packet, LLDP information stored locally.

Optionally, when a local configuration of the network device changes (for example, a device connected to a port is disconnected, or a new device is connected to a port), sending of an LLDP packet is also triggered, to notify a neighbor device of a change status of the local configuration.

For example, leaf 1 in FIG. 4 is used as an example. Leaf 1 may receive an LLDP packet sent by each neighbor device (including but not limited to server 11 to server 1n, spine 1, and spine 2 in FIG. 4). The LLDP packet sent by each neighbor device includes but is not limited to information such as a source address, a destination address, and a packet type. The source address includes but is not limited to a MAC address of a source device (that is, an LLDP packet transmitter) and a MAC address of a source port (that is, a port sending the LLDP packet).

It is assumed that leaf 1 receives, through port 13, an LLDP packet sent by spine 1. The LLDP packet includes but is not limited to a source MAC address (that is, a MAC address of spine 1 and a MAC address of a port (for example, port 31) connecting spine 1 and leaf 1), a destination address (that is, a multicast address), and the like. Leaf 1 parses the LLDP packet, and obtains information such as a neighbor device identifier (that is, the MAC address of spine 1) and a neighbor device interface identifier (for example, the MAC address of port 31 of spine 1). It should be noted that, leaf 1 obtains only related identifiers (including a device identifier, an interface identifier, and the like) of neighbor devices by using LLDP packets, and cannot determine specific objects corresponding to these identifiers in the communication system.

For example, leaf 1 stores LLDP information corresponding to port 13. The LLDP information includes but is not limited to the MAC address of spine 1 (that is, an identifier of a neighbor device), a MAC address of port 13 of leaf 1 (that is, a port identifier of a network device), the MAC address of port 31 of spine 1 (that is, a port identifier of the neighbor device), and the like. The LLDP information indicates that a neighbor device connected to port 13 of leaf 1 is port 31 of spine 1. In embodiments of this application, an example in which an identifier of a port is a MAC address is used for description. In another embodiment, the identifier of the port may alternatively be a port identifier (Identifier, ID) or the like. This is not limited in this application, and no repeated description is provided below. For example, in some examples, a port of a network device may not have a MAC address, but corresponds to a port ID. Correspondingly, a port identifier carried in an LLDP packet sent by the network device is the port ID.

For example, the analysis unit sends, in an initialization phase (for example, after the device is powered on), a neighbor information request to each network device in the observation range, to request neighbor information. Optionally, the analysis unit communicates with another device in the system according to the simple network management protocol (Simple Network Management Protocol, SNMP) or the telecommunication network protocol (Telecommunication Network Protocol, Telnet), to obtain neighbor information. In response to the received neighbor information request, each network device in the observation range sends a response message to the analysis unit to feed back the neighbor information. The response message includes but is not limited to an identifier of the local network device (that is, a transmitter of a neighbor information response) and latest LLDP information obtained by the local network device. The LLDP information includes but is not limited to a port identifier of the local network device, an identifier of a neighbor device, a port identifier of the neighbor device, and the like.

The analysis unit updates locally stored neighbor information of each network device in response to the received neighbor information response message sent by each network device. The neighbor information includes but is not limited to an identifier of the network device, a port identifier of the network device, an identifier of a neighbor device, a port identifier of the neighbor device, and the like.

Optionally, LLDP information stored by each network device may include LLDP information corresponding to all ports (including an empty port, that is, a port connected to no neighbor device). Optionally, the LLDP information stored by each network device may alternatively include only LLDP information corresponding to a port connected to a neighbor device, that is, does not include LLDP information such as a MAC address of an empty port. Correspondingly, the neighbor information obtained by the analysis unit may include neighbor information of all ports of the network device, or may include only neighbor information corresponding to a port connected to a neighbor device. This is not limited in this application.

Optionally, the analysis unit may periodically (period duration may be set based on an actual requirement, and is not limited in this application) send a neighbor request to each network device, to obtain the neighbor information of each network device. Optionally, as described above, each network device may trigger sending of an LLDP packet when a local configuration changes. Correspondingly, when detecting that the local LLDP information changes, the network device may send a neighbor information update indication to the analysis unit. The indication may include an identifier of the local network device, a port identifier of the local network device, an identifier of a neighbor device, a port identifier of the neighbor device, and the like. The analysis unit may update the neighbor information of the corresponding network device based on the received neighbor information update indication.

Optionally, in a case in which the device (including a network device and user equipment) detects that the LLDP information changes, the sent neighbor information update indication may include only neighbor information corresponding to a changed port and/or neighbor device. For example, if leaf 1 detects that the neighbor device of port 13 is disconnected, leaf 1 updates local LLDP information, where port 13 in the LLDP information is an empty port, that is, is not connected to any neighbor device. Leaf 1 sends a neighbor information update indication to the analysis unit, where the update indication includes the identifier of leaf 1 (that is, a MAC address of leaf 1) and an identifier of port 13 (for example, the MAC address of port 13), to indicate that port 13 of leaf 1 is an empty port, that is, is not connected to any neighbor device. The analysis unit may find, based on the MAC address of leaf 1, neighbor information corresponding to leaf 1, and perform matching in the neighbor information corresponding to leaf 1 based on the MAC address of port 13. The analysis unit 1 updates neighbor information corresponding to the successfully matched MAC address of port 13. For example, an original identifier of a neighbor device (for example, the MAC address of spine 1) corresponding to the MAC address of port 13 is deleted, to indicate that port 13 is currently an empty port and is not connected to any neighbor device.

Optionally, the neighbor information update indication may alternatively include current neighbor information of all ports or a port connected to a neighbor device.

In a possible implementation, the user equipment in the system may have functions of sending an LLDP packet and maintaining LLDP information, or may not have functions of sending an LLDP packet and maintaining LLDP information. This is not limited in this application.

In embodiments of this application, as described above, the analysis unit maintains the network device identifier list. The network device identifier list (a list manner is used as an example in this embodiment of this application, and another form may be used in another embodiment, which is not limited in this application) stores identifiers of all network devices in the observation range. The identifier of the network device includes but is not limited to an IP address of the network device, a MAC address of the network device, a management address of the network device, and the like. The analysis unit determines a port type of a port of each network device based on the obtained neighbor information of each network device and the network device identifier list. The port type includes a user-side port type and a network-device-side port type.

In an example, if an identifier of a neighbor device connected to the port of the network device is in the network device identifier list, a type of the neighbor device connected to the port is a network device (which may also be referred to as a network device type). This may also be understood as that the neighbor device connected to the port is a network device in an observation range. Correspondingly, the port type of the port is the network-device-side port type.

In another example, if an identifier of a neighbor device connected to the port of the network device is not included in the network device identifier list, a type of the neighbor device connected to the port is a non-network device, for example, may be user equipment, or may be an unknown network device (that is, a network device in a non-observation range). Correspondingly, the port type of the port is the user-side port type. Optionally, a type of a port that is not connected to any device (which may be briefly referred to as an empty port) may also be classified into the user-side port type. That is, if the neighbor information further includes an identifier of a port that is not connected to a neighbor device, the analysis unit determines the port as a user-side port. Optionally, as described above, some user equipments do not have a function of sending an LLDP packet. Correspondingly, the network device does not receive an LLDP packet sent by such user equipment. Correspondingly, the LLDP information maintained by the network device does not include related information corresponding to the port. Similar to the foregoing empty port, the port is also classified into the user-side port type. In other words, in embodiments of this application, the identifier of the neighbor device connected to the port is included in the network device identifier list, and a port type corresponding to the port is a network device. In other cases (including an empty port, a neighbor device is not in an observation range, or an LLDP packet fails to be obtained), a port type is a user-side port.

For example, the analysis unit may further determine, based on the port type of each network device, a network device including a port of the user-side port type. The analysis unit may specify this type of network device as a mirrored packet transmitter. Correspondingly, this type of network device may generate a mirrored packet when receiving a data packet, and transmit the mirrored packet to a device to which an access location obtaining unit belongs, to reduce a quantity of mirrored packets exchanged in the system, and reduce communication overheads in the system. In another example, this type of network device may also generate a mirrored packet when receiving a data packet through a port of the user-side port type, and transmit the mirrored packet to a device to which an access location obtaining unit belongs, to further reduce a quantity of mirrored packets exchanged in the system, and reduce communication overheads in the system.

In embodiments of this application, after receiving the data packet, the at least one network device serving as the mirrored packet transmitter replicates the data packet, encapsulates the replicated data packet into a mirrored packet, and sends the mirrored packet to the access location obtaining unit. The network device forwards the data packet, to send the data packet to a next device on a transmission path. In an example, in a layer 2 forwarding scenario, a network device on a transmission path only transparently transmits a forwarded data packet (that is, does not change the data packet). In another example, in a layer 3 forwarding scenario, some network devices on a transmission path perform processing such as decapsulation and re-encapsulation on a data packet and then forward the data packet (for example, change a MAC address in the data packet).

In a possible implementation, content of the data packet carried in the mirrored packet may include only some content of the original data packet, for example, may be first 64 bytes or first 128 bytes of the original data packet. This may be set based on an actual requirement. This is not limited in this application. That is, after receiving the data packet, the network device may replicate some content of the data packet, and encapsulate a replicated partial data packet into a mirrored packet.

In a possible implementation, the packet mirroring function configuration of the at least one network device serving as the mirrored packet transmitter may include a data packet type configuration, and the data packet type configuration indicates the network device to generate a mirrored packet when receiving a data packet of a specified type, so that a transmission frequency of the mirrored packet can be effectively reduced, and communication overheads can be reduced. Optionally, the data packet of the specified type may be a data packet that carries transport layer control information or application layer control information. For example, the transport layer control information may include but is not limited to a flag bit such as urgent (urgent, URG), acknowledgement (acknowledgement, ACK), push (push, PSH), synchronous (synchronous, SYN), finish (finish, FIN), or reset (reset, RST) in the transmission control protocol (Transmission Control Protocol, TCP). The application layer control information includes but is not limited to a packet (Packet) in a quick UDP internet connection (Quick UDP Internet Connections, QUIC), or the like. This is not limited in this application. The data packet of the specified type described above is merely an example, and may be set based on an actual requirement. This is not limited in this application.

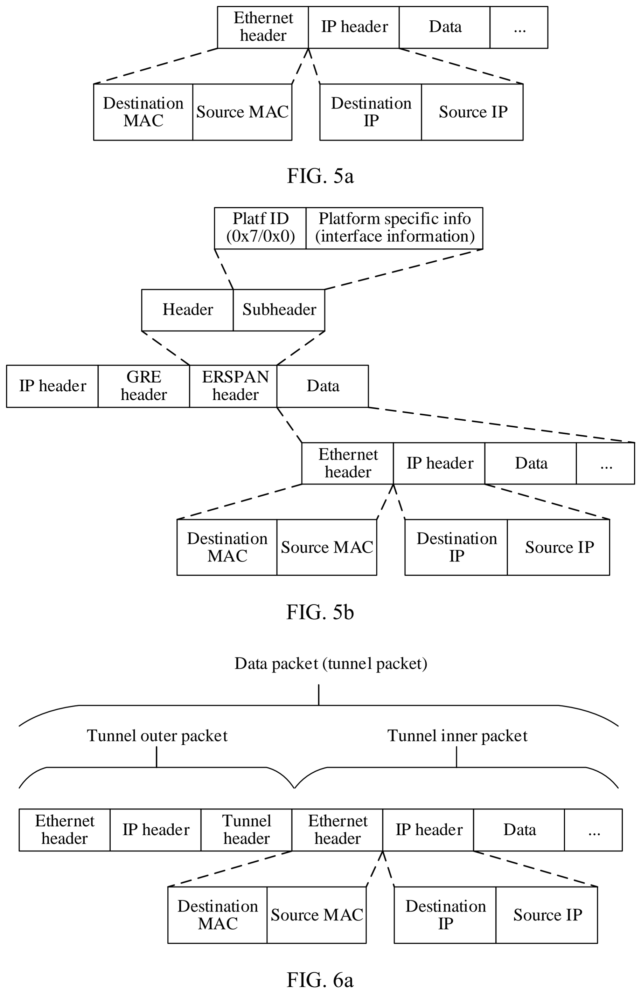

FIG. 5a is an example diagram of a structure of a data packet. Refer to FIG. 5a. The data packet includes but is not limited to fields such as an Ethernet header (Ethernet Header) field, an IP header (IP Header) field, and a data field.

The Ethernet header field includes but is not limited to a destination address field and a source address field. The destination address field is used to carry a MAC address of a destination device (that is, a receiver of the data packet) (referred to as a destination MAC address for short), and the source address field is used to carry a MAC address of a source device (that is, a transmitter of the data packet) (referred to as a source MAC address for short).

The IP header field includes but is not limited to a destination address field and a source address field. The destination address field is used to carry an IP address of a destination device (referred to as a destination IP address for short), and the source address field is used to carry an IP address of a source device (referred to as a source IP address for short).

The data field is used to carry data, for example, application data or other control information.

In embodiments of this application, for each network device, a transmitter of a data packet may be optionally a previous device on a transmission path of the data packet. For example, device A (for example, user equipment) generates a data packet, and sends the data packet to device B, and device B forwards the data packet to device C. For device B, device A is a transmitter of the data packet. For device C, device B is a transmitter of the data packet. Unless otherwise specified, a transmitter of a data packet in the following embodiments is each transmitter (including an initial transmitter, that is, a device indicated by a source IP address in the data packet) on a transmission path. Correspondingly, a receiver of the data packet is optionally a next device on the transmission path of the data packet. For example, device A (for example, user equipment) generates a data packet, and sends the data packet to device B, and device B forwards the data packet to device C. For device A, device B is a receiver of the data packet. For device B, device C is a receiver of the data packet. Unless otherwise specified, a receiver of a data packet in the following embodiments is each receiver (including an end receiver, that is, a device indicated by a destination IP address in the data packet) on a transmission path.

In a possible implementation, in a layer 2 forwarding scenario, the destination MAC address in the Ethernet header field is always a MAC address of an end receiver of the data packet, and the source MAC address is always a MAC address of an initial transmitter that generates the data packet. Similarly, the destination IP address in the IP header field is always an IP address of the end receiver, and the source IP address is always an IP address of the initial transmitter. For example, device A (for example, user equipment) generates a data packet and sends the data packet to device C through device B. In a data packet forwarding process, addresses (including an IP address and a MAC address) in an Ethernet header field and an IP header field of a data packet sent or received by each device remain unchanged. Destination addresses are a MAC address and an IP address of device C, and source addresses are a MAC address and an IP address of device A.

In another possible implementation, in a layer 3 forwarding scenario, a network device on a transmission path decapsulates and re-encapsulates a data packet, for example, performs layer 2 encapsulation again. Correspondingly, a source MAC address and a destination MAC address in a layer 2 frame header (that is, an Ethernet header field) are correspondingly updated. That is, a source MAC address in the Ethernet header field of the re-encapsulated data packet indicates a network device that currently forwards the data packet, and a destination MAC address indicates a next layer 3 device that receives the data packet on the transmission path. The destination IP address in the IP header field in the data packet is always an IP address of the end receiver, and the source IP address is always an IP address of the initial transmitter.

In other words, in embodiments of this application, the transmitter and the receiver of the data packet are divided into two aspects. One aspect is an actual transmission path aspect. In other words, on the actual transmission path, the transmitter of the data packet in embodiments of this application is a previous device on the data packet transmission path, and the receiver of the data packet is a next device on the data packet transmission path. The other aspect is an aspect indicated based on the MAC address in the data packet. Optionally, in a layer 2 forwarding scenario, a device indicated by a MAC address (including a source MAC address and a destination MAC address) in a data packet is the same as a device indicated by an IP address, that is, a transmitter indicated by the MAC address is an initial transmitter, and a receiver is an end receiver. However, in a layer 3 forwarding scenario, a device indicated by a MAC address in a data packet is different from a device indicated by an IP address, and the device indicated by the MAC address is the same as a transmitter or a receiver on an actual transmission path.

In embodiments of this application, an example in which the mirrored packet is an encapsulated remote switched port analyzer (Encapsulated Remote Switched Port Analyzer, ERSPAN) packet is used for description. In another embodiment, the mirrored packet may alternatively be another protocol packet that can implement a function of the mirrored packet in embodiments of this application. This is not limited in this application. For example, optionally, encapsulation of the ERSPAN packet is generic routing encapsulation (Generic Routing Encapsulation, GRE). A principle of the encapsulation is that a source port packet is copied, and is sent to a destination device through GRE encapsulation. FIG. 5b is an example diagram of a structure of a mirrored packet. Refer to FIG. 5b. The mirrored packet includes but is not limited to an IP header field, a GRE header field, an ERSPAN header field, and a data field.

The IP header field is used to carry an identifier of a transmitter and an identifier of a receiver of the mirrored packet. Optionally, the identifier of the transmitter is an IP address of a network device that sends the mirrored packet. Optionally, the identifier of the receiver is an IP address of a device to which an access location obtaining unit belongs.

The GRE header field is used to carry information such as a version number and a flag bit.

The ERSPAN header field includes but is not limited to a header field and a subheader (subheader) field. A length of the header field is 12 bytes, including but not limited to a session ID field, a VLAN field, and the like. Optionally, a length of the subheader field is 8 bytes, including but not limited to a Platf ID (platform identifier) field and a platform specific Info (platform specific information) field. In embodiments of this application, when a value in the Platf ID field is a preset value, the platform specific Info field is used to carry a receive port identifier. The receive port identifier is an identifier of a port through which the network device that sends the mirrored packet receives the data packet. For example, if leaf 1 receives, through port 11, a data packet sent by server 11, a receive port identifier in a mirrored packet sent by leaf 1 is a port identifier of port 11, for example, a MAC address of port 11. In another embodiment, the receive port identifier may alternatively be a port number or the like. This is not limited in this application. In embodiments of this application, an example in which the receive port identifier carried in the platform specific Info field is a MAC address of a port is used. In another embodiment, because a length of the platform specific Info field is limited, the receive port identifier may be INDEX (index) information corresponding to the port. In this example, both the access location obtaining unit and the analysis unit may maintain a correspondence between INDEX information and a MAC address of a port, so that the MAC address of the corresponding port may be queried by using the INDEX information.

The data field is used to carry a data packet. That is, the original data packet is encapsulated in the field.

In embodiments of this application, the encapsulated mirrored packet includes an outer packet and an inner packet. The outer packet is a packet header that is encapsulated according to a tunneling protocol of the mirrored packet, and includes but is not limited to an IP header field, a GRE header field, an ERSPAN header field, and the like. The inner packet includes a data field, that is, the inner packet is the original data packet.

FIG. 6a is an example diagram of a structure of another data packet. Refer to FIG. 6a, the data packet may be referred to as a tunnel packet. In embodiments of this application, the tunnel packet may comply with the VXLAN protocol. In another embodiment, the tunnel packet may comply with another tunnel protocol. This is not limited in this application. For example, the tunnel packet may include a tunnel outer packet (which may also be referred to as a tunnel packet header) and a tunnel inner packet (which may also be referred to as an original data packet).

For example, the tunnel inner packet is the original data packet that is sent by user equipment (for example, a VM) and that carries application data (or other control information), and includes but is not limited to fields such as an Ethernet header field, an IP header field, and a data field.

The Ethernet header field of the tunnel inner packet includes but is not limited to a destination address field and a source address field. The destination address field is used to carry a MAC address of a destination device (that is, a receiver of the data packet) (referred to as a destination MAC address for short), and the source address field is used to carry a MAC address of a source device (that is, a transmitter of the data packet) (referred to as a source MAC address for short).

The IP header field of the tunnel inner packet includes but is not limited to a destination address field and a source address field. The destination address field is used to carry an IP address of a destination device (referred to as a destination IP address for short), and the source address field is used to carry an IP address of a source device (referred to as a source IP address for short).

The data field is used to carry data, for example, application data or other control information.

Still refer to FIG. 6a. For example, the tunnel outer packet is encapsulated according to the VXLAN tunnel protocol, and includes but is not limited to an Ethernet header field, an IP header field, a tunnel header field, and the like.

The Ethernet header field of the tunnel outer packet includes a source MAC address of a tunnel and a destination MAC address of the tunnel. Specifically, in a process of forwarding a tunnel packet, the network device re-encapsulates the tunnel packet, and updates an Ethernet header field of a tunnel outer packet.

The IP header field of the tunnel outer packet includes but is not limited to a source IP address of the tunnel and a destination IP address of the tunnel.

The tunnel header field includes but is not limited to some tunnel information, for example, a tunnel identifier.

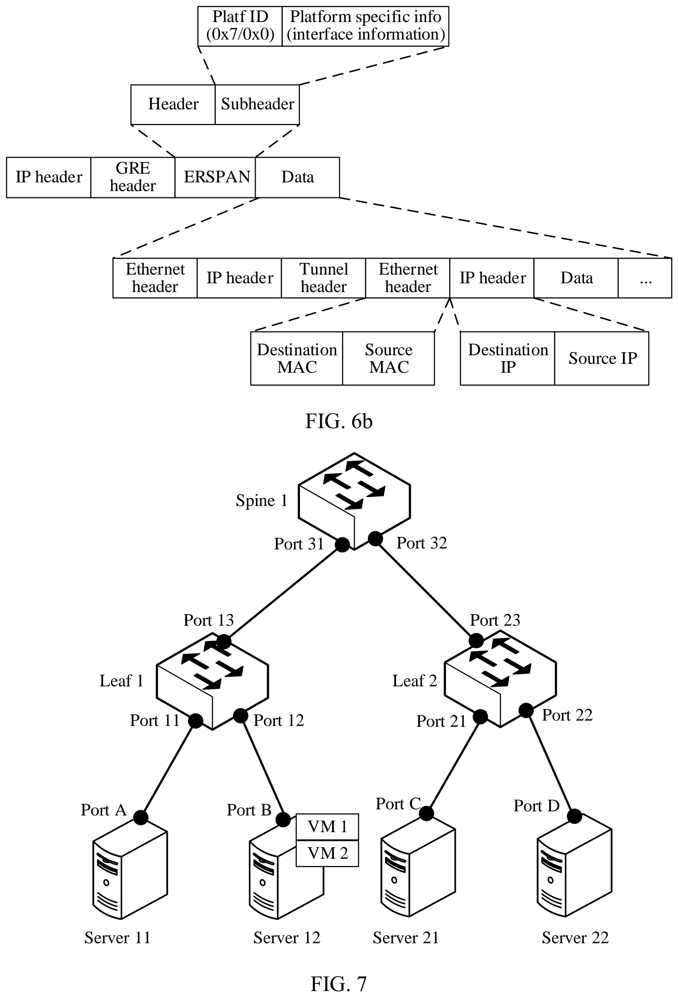

FIG. 6b is an example diagram of a structure of a mirrored packet. Refer to FIG. 6b. The mirrored packet includes but is not limited to an IP header field, a GRE header field, an ERSPAN header field, and a data field. A data packet is carried in the data field of the mirrored packet. For descriptions of other fields of the mirrored packet, refer to FIG. 5b. Details are not described herein again.

In embodiments of this application, an example in which the mirrored packet is an ERSPAN TypeIII packet is used for description. In another embodiment, the mirrored packet may alternatively be another protocol packet that can implement a function of the mirrored packet in embodiments of this application, that is, a packet type that can implement encapsulation of an original data packet and carry interface information. This is not limited in this application.

For example, the access location obtaining unit receives the mirrored packet sent by the at least one network device. The device to which the access location obtaining unit belongs determines, based on a destination address field in an IP header field in the mirrored packet, that a receiver of the mirrored packet is the device. The device obtains the mirrored packet, and transmits the mirrored packet to the access location obtaining unit for further processing. The access location obtaining unit obtains, based on the mirrored packet, information carried in the IP header field, a GRE header field, and an ERSPAN header field in the packet.

In an example, if information carried in a Platf ID field in a subheader field in the ERSPAN header is a preset value (for example, 0x7 or 0x0, which may be set based on an actual requirement, and is not limited in this application), the access location obtaining unit may determine that a platform specific Info field carries interface information, that is, a port identifier corresponding to a port through which the mirrored packet transmitter receives the data packet. The access location obtaining unit obtains the interface information, and performs S302.

In another example, if information carried in a Platf ID field in a subheader field in the ERSPAN header is a non-preset value (for example, 0x7 or 0x0, which may be set based on an actual requirement, and is not limited in this application), the mirrored packet may be a mirrored packet required in another scenario, and other processing may be performed. This is not limited in this application.

S302: Determine, based on the mirrored packet, whether a transmitter of the data packet is user equipment.

In an example, after the access location obtaining unit receives the mirrored packet sent by one network device, and obtains the interface information from the mirrored packet, the access location unit may determine, based on the receive port identifier (that is, the interface information) in the mirrored packet, whether the transmitter of the data packet is user equipment.

In another example, after the access location obtaining unit receives the mirrored packet sent by the at least one network device, and obtains the interface information from the mirrored packet, the access location unit may determine, based on the identifier of the transmitter in the mirrored packet (that is, the source MAC address in the data packet), whether the transmitter of the data packet is user equipment.

The following describes the foregoing two determining manners in detail.
1. Determine, based on the receive port identifier, whether the transmitter is user equipment.

### Manner 1:

The access location obtaining unit determines, based on a pre-obtained correspondence between a port identifier and a port type, a port type of the receive port indicated by the receive port identifier carried in the mirrored packet. For example, if the access location obtaining unit determines that the port type of the receive port is the user-side port type, it may be determined that the transmitter corresponding to the data packet received based on the receive port is user equipment (which may also be understood as a user equipment type).

Specifically, in this example, the analysis unit may obtain neighbor information of each network device. The analysis unit may determine a port type of a port in each network device based on the neighbor information. For example, the port type includes the user-side port type and the network-device-side port type. A type of a neighbor device connected to the port is a network device (which may also be referred to as a network device type). This may also be understood as that the neighbor device connected to the port is a network device in an observation range. Correspondingly, the port type of the port is the network-device-side port type. If a neighbor device connected to the port is a network device in a non-observation range, the port type of the port is the user-side port type. Optionally, a type of a port that is not connected to any device (which may be briefly referred to as an empty port) may also be classified into the user-side port type. For a manner of determining the port type by the analysis unit, refer to related descriptions in S301. Details are not described herein again.

The analysis unit may send an analysis result to the access location obtaining unit. In an example, the analysis result includes but is not limited to an identifier of a port of the user-side port type and an identifier of a corresponding network device. Optionally, the identifier of the network device is an IP address of the network device, and the port identifier is a MAC address of the port (or may be a port ID, which is not limited in this application). Correspondingly, the access location obtaining unit maintains a table of a correspondence between a network device port and a port type (a list manner is used as an example in this embodiment of this application, and another form may be used in another embodiment, which is not limited in this application). The access location obtaining unit may correspondingly write the obtained identifier of the network device and the port identifier of the corresponding port into the list. In other words, in this example, each network device identified in the list is a network device having a port of the user-side port type, and all ports in the list are ports of the user-side port type. For example, Table 1 is a form of the table of the correspondence between a network device port and a port type.

**Table 1**

| Serial number | Network device identifier | Port identifier |
|---|---|---|
| 1 | Network device 1 | Port 1 |
| 2 | Network device 1 | Port 2 |
| 3 | Network device 2 | Port 3 |
| 4 | Network device 2 | Port 4 |
| 5 | Network device 3 | Port 9 |
| 6 | Network device 3 | Port 10 |
| 7 | Network device 3 | Port 11 |
| ... | ... | ... |

Refer to Table 1. In the table, the network device identifier is an IP address of each network device, and the port identifier is a MAC address corresponding to a port. In this example, network device 1, network device 2, and network device 3 are all network devices having a port of the user-side port type. Ports of the user-side port type of network device 1 include port 1 and port 2, ports of the user-side port type of network device 2 include port 3 and port 4, and ports of the user-side port type of network device 3 include port 9 to port 11. The foregoing correspondence is merely an example, and is not limited in this application.

In another example, the analysis result includes but is not limited to identifiers of all network devices in an observation range in the system, port identifiers of ports of the network devices, and a port type corresponding to each port. The access location obtaining unit may correspondingly write the received identifier of the network device and the corresponding port identifier and port type into the table of the correspondence between a network device port and a port type. For example, Table 2 is a form of the table of the correspondence between a network device port and a port type.

**Table 2**

| Serial number | Network device identifier | Port identifier | Port type |
|---|---|---|---|
| 1 | Network device 1 | Port 1 | User-side port type |
| 2 | Network device 1 | Port 2 | User-side port type |
| 3 | Network device 1 | Port 3 | Network-device-side port type |
| 4 | Network device 1 | Port 4 | Network-device-side port type |
| 5 | Network device 2 | Port 1 | User-side port type |
| 6 | Network device 2 | Port 2 | User-side port type |
| 7 | Network device 2 | Port 3 | Network-device-side port type |
| ... | ... | ... | ... |

Refer to Table 2. In the table, the network device identifier is an IP address of each network device, and the port identifier is a MAC address corresponding to a port. In this example, both port 1 and port 2 of network device 1 are ports of the user-side port type. Both port 3 and port 4 of network device 1 are ports of the network-device-side port type. Both port 1 and port 2 of network device 2 are ports of the user-side port type. Port 3 of network device 2 is a port of the network-device-side port type. The foregoing correspondence is merely an example, and is not limited in this application.

In a possible implementation, an operation and maintenance engineer may connect, by using a terminal (for example, a terminal device like a computer, a tablet, or a mobile phone), to an interface provided by the analysis unit, and configure the table of the correspondence between a network device port and a port type for the analysis unit by using the terminal. The analysis unit may obtain the table of the correspondence between a network device port and a port type configured by the operation and maintenance engineer.

For example, the access location obtaining unit receives the mirrored packet, and decapsulates the mirrored packet to obtain information (or a parameter) carried in an outer packet of the mirrored packet. Specifically, the access location obtaining unit reads the identifier of the mirrored packet transmitter in the IP header field and the interface information (that is, the receive port identifier) carried in the ERSPAN header, where the receive port identifier indicates a port through which the network device serving as the mirrored packet transmitter receives the data packet. For use of the information in the GRE header field, refer to embodiments of the existing technology. Details are not described in this application.

The access location obtaining unit queries the table of the correspondence between a network device port and a port type based on the identifier of the mirrored packet transmitter and the receive port identifier in the mirrored packet, so as to determine the port type corresponding to the receive port.

In a possible implementation, if the table of the correspondence between a network device port and a port type is in the form shown in Table 1, only related information (including a port identifier and an identifier of a corresponding network device) of a port of the user-side port type is included. In an example, the access location obtaining unit detects, based on the identifier of the mirrored packet transmitter and the receive port identifier, that the receive port identifier carried in the mirrored packet is not included in the table of the correspondence between a network device port and a port type, and may determine that the port indicated by the receive port identifier is a port of the network-device-side port type, that is, a port of a non-user-side port type. In another example, the access location obtaining unit detects, based on the identifier of the mirrored packet transmitter and the receive port identifier, that the receive port identifier carried in the mirrored packet is included in the table of the correspondence between a network device port and a port type, and may determine that the port indicated by the receive port identifier is a port of the user-side port type, that is, a port of the network-device-side port type.

In another possible implementation, the table of the correspondence between a network device port and a port type is in the form shown in Table 2, that is, includes related information of a port of the user-side port type and related information of a port of the network-device-side port type. For example, the access location obtaining unit performs matching on each entry (including the network device identifier and the port identifier) in the table of the correspondence between a network device port and a port type based on the identifier of the mirrored packet transmitter and the receive port identifier, and obtains a port type corresponding to a successfully matched receive port identifier, so as to determine the port type corresponding to the port indicated by the receive port identifier.

For example, the access location unit may further determine, based on the port type of the receive port, whether the transmitter corresponding to the data packet received based on the receive port is user equipment.

In an example, if the access location obtaining unit determines that the port indicated by the receive port identifier is a port of the user-side port type, the access location obtaining unit may further determine that the transmitter corresponding to the data packet received by the port indicated by the receive port identifier is user equipment. This may also be understood as that a device type is a user equipment type or a non-network-device type.

In another example, if the access location obtaining unit determines that the port indicated by the receive port identifier is a port of the network-device-side port type, the access location obtaining unit may further determine that the transmitter corresponding to the data packet received by the port indicated by the receive port identifier is a network device. This may also be understood as that a device type is a network device type or a non-user-equipment type.

### Manner 2:

In embodiments of this application, as described above, the at least one network device serving as the mirrored packet transmitter is a specified network device in the system, that is, the analysis unit may specify at least one network device having a port of the user-side port type as the mirrored packet transmitter. That is, in this example, the network device having the port of the user-side port type sends the mirrored packet to the access location obtaining unit only after receiving the data packet through the port of the user-side port type. Correspondingly, after receiving the mirrored packet, the access location obtaining unit may determine that the transmitter corresponding to the data packet in the mirrored packet is user equipment, that is, the device type is a user equipment type.

Optionally, the at least one network device serving as the mirrored packet transmitter may also be configured to receive the data packet through any port. In this example, manner 1 may be used for execution. That is, the type of the receive port that receives the data packet still needs to be determined first, and then whether the transmitter is user equipment is further identified.

In a possible implementation, the access location obtaining unit periodically performs the procedure shown in FIG. 3. For example, period duration is 1s, and may be set based on an actual requirement. This is not limited in this application. That is, the access location obtaining unit receives one or more mirrored packets within 1s, and may perform S302 and S303 on the received mirrored packets.

In this way, in embodiments of this application, the mirrored packet is extended, so that the mirrored packet can carry the receive port identifier. The apparatus may determine, by using the receive port, whether the transmitter connected to the receive port is user equipment. An identification solution applicable to a scenario of layer 2 or layer 3 data packet forwarding is provided, so that an access device of the user equipment can be accurately located, and then the access location of the user equipment can be obtained.

2. Determine, based on the identifier of the transmitter of the data packet, whether the transmitter is user equipment.

For example, the access location obtaining unit receives a plurality of mirrored packets. The mirrored packets may be from one or more network devices. For example, the plurality of mirrored packets may be sent by network device A, and transmitters corresponding to data packets in all the mirrored packets may be the same or different, that is, network device A may generate the plurality of mirrored packets based on data packets sent by one or more devices. Network device A may alternatively generate the plurality of mirrored packets based on a plurality of data packets sent by one device. For another example, the plurality of mirrored packets are separately from network device A and network device B. Similarly, a mirrored packet sent by network device A may be generated based on data packets sent by one or more devices. The network device B is similar, and details are not described herein again.

For example, the access location obtaining unit may periodically process the plurality of received mirrored packets. For example, period duration may be 1s, and may be set based on an actual requirement. This is not limited in this application.

The access location obtaining unit groups the plurality of mirrored packets based on a transmitter identifier carried in each mirrored packet. Mirrored packets with a same transmitter identifier are grouped into a same group. Specifically, the access location obtaining unit reads a source IP address of an IP header field in an inner packet (that is, a data packet) in each mirrored packet, and groups mirrored packets with a same source IP address into a same group. It may be understood that inner packets (that is, data packets) of mirrored packets in each group are from a same initial transmitter (that is, a device identified by the source IP address).

Then, the access location obtaining unit filters the mirrored packets in each group based on transmitter identifiers in the inner packets of the mirrored packets. Specifically, the access location obtaining unit reads a source MAC address in an Ethernet header field in a data packet of each mirrored packet in the group, and the access location obtaining unit matches the source MAC address in each mirrored packet with a network device identifier list (the list includes identifiers of all network devices in an observation range). The access location obtaining unit filters out a successfully matched mirrored packet. That is, if the source MAC addresses in the mirrored packets are in the network device identifier list, that is, transmitters of the inner packets (that is, the data packets) in the mirrored packets are network devices in the observation range, the access location obtaining unit filters out such mirrored packets. The access location obtaining unit performs next processing on a mirrored packet whose source MAC address does not belong to the network device identifier list in the group, that is, a mirrored packet whose inner packet transmitter is a network device in a non-observation range.

For example, the access location obtaining unit reads a network device identifier of each mirrored packet after filtering, and determines whether mirrored packets are from a same network device. Specifically, the access location obtaining unit reads a source IP address in an IP header field of an outer packet of each mirrored packet after filtering. As described above, the source IP address indicates a transmitter (the transmitter is a network device in the observation range) of the mirrored packet. The access location obtaining unit detects whether source IP addresses in outer packets of the mirrored packets are the same.

For example, if the source IP addresses in the outer packets are the same, the access location obtaining unit may determine that these mirrored packets (that is, one or more filtered mirrored packets) are from a same transmitter (that is, a same network device). Correspondingly, the access location obtaining unit determines that a transmitter corresponding to a data packet of the filtered mirrored packet is user equipment, and the transmitter of the mirrored packet is an access point of the user equipment. In this way, in embodiments of this application, an actual transmitter of the data packet may be obtained by using a feature of the mirrored packet, and a type of the transmitter is further determined based on an identifier of the transmitter.

In embodiments of this application, either of the two determining manners, that is, "Determine, based on the receive port identifier, whether the transmitter is user equipment" and "Determine, based on the identifier of the transmitter of the data packet, whether the transmitter is user equipment", may be independently performed, to determine a role type (that is, the user equipment or the network device) of the transmitter of the data packet.

In a possible implementation, the foregoing two determining manners, that is, "Determine, based on the receive port identifier, whether the transmitter is user equipment" and "Determine, based on the identifier of the transmitter of the data packet, whether the transmitter is user equipment", may be asynchronously performed, that is, may be performed in parallel, thereby improving accuracy of locating the access location. For example, the access location obtaining unit may perform, at a trigger moment of each period (for example, 1s), the foregoing two determining manners in parallel for a plurality of mirrored packets obtained in the period. In an example, if it is determined, in the manner of "Determine, based on the receive port identifier, whether the transmitter is user equipment", that the transmitter of the data packet is user equipment, and it is determined, in the manner of "Determine, based on the identifier of the transmitter of the data packet, whether the transmitter is user equipment", that the transmitter of the data packet is a network device (that is, not user equipment), the access location obtaining unit may determine that the transmitter of the data packet is the network device. A specific example is described in the following embodiments. In another example, in a scenario in which a plurality of access locations are determined in the manner of "Determine, based on the identifier of the transmitter of the data packet, whether the transmitter is user equipment", the access location obtaining unit may further determine the access location of the user equipment with reference to a determining result of the manner of "Determine, based on the identifier of the transmitter of the data packet, whether the transmitter is user equipment".

S303: If the transmitter is user equipment, obtain the access location of the user equipment.

For example, after determining that the transmitter of the data packet is user equipment, the access location obtaining unit may determine that a transmitter of the mirrored packet to which the data packet belongs is the access point of the user equipment, and an interface connecting the access point and the user equipment is an access port of the user equipment.

For example, after determining the access point, the access location obtaining unit reads the mirrored packet (which is specifically the mirrored packet that participates in the determining step in S302) from the access point to obtain access location information of the user equipment. The access location information includes but is not limited to an identifier of the user equipment, an access point identifier, an access port identifier (that is, a connection interface between the access point and the user equipment), and the like.

Specifically, the access location obtaining unit reads a source IP address in an IP header field of an outer packet of the mirrored packet (the mirrored packet from the access point), where the IP address is an identifier of a network device accessed by the user equipment, or may also be understood as an identifier of the access point of the user equipment. The access location obtaining unit reads a source IP address in an IP header field of an inner packet of the mirrored packet, where the IP address is the identifier of the user equipment. In addition, the access location obtaining unit reads interface information (that is, a receive port identifier) in an ERSPAN header field of the outer packet of the mirrored packet, that is, the access port identifier.

For example, the access location obtaining unit stores the access location information of the user equipment in an access location storage unit. Specifically, the access location storage unit may maintain an access location information list (which may alternatively be in another storage form, and is not limited in this application). The list includes one or more entries, and each entry is used to store access location information of user equipment. The entries include but are not limited to an identifier of the user equipment, an access point identifier, an access port identifier, and the like.

The access location obtaining unit queries the access location information list based on the identifier of the user equipment. In a possible implementation, if the access location obtaining unit detects that the identifier of the user equipment exists in the access location information list, the access location obtaining unit further detects whether the stored access location information (including the access point identifier and the access port identifier) of the user equipment is consistent with the currently obtained access location information of the user equipment. In an example, if the two are consistent, the currently obtained access location information of the user equipment does not need to be written into the list. In another example, if the two are inconsistent, the access location obtaining unit writes the currently obtained access location information of the user equipment into the access location information list, to update the access location information of the user equipment. In another possible implementation, if the access location obtaining unit detects that the identifier of the user equipment does not exist in the access location information list, the access location obtaining unit writes the currently obtained access location information of the user equipment into the access location information list.

Optionally, the access location obtaining unit may further correspondingly write, into the entry, obtaining time of the currently obtained access location of the user equipment. The obtaining time may be time at which the access location is obtained, or may be time at which the access location information is stored. This is not limited in this application. In this way, in a subsequent fault locating process, an operation and maintenance engineer (or an administrator) may perform operations such as fault locating and fault removal based on a change status (including a location change and a time point) of an access location of same user equipment. It should be noted that, the change of the access location of the user equipment may be migration of the access location of the user equipment. For example, the user equipment previously accesses network device A, and then migrates to network device B (that is, accesses network device B after the user equipment is disconnected from network device A).

With reference to the accompanying drawings, the following describes in detail application of the access location obtaining method in embodiments of this application in different application scenarios. It should be noted that the scenarios (including a device connection relationship, a device quantity, a data packet transmission path, and the like) shown in the following embodiments are merely examples. This is not limited in this application.

FIG. 7 is an example diagram of an application scenario. Refer to FIG. 7. A system includes but is not limited to spine 1, leaf 1, leaf 2, and a plurality of user equipments. The user equipments include but are not limited to server 11, server 12, server 21, and server 22. In this example, port 11 of leaf 1 is connected to port A of server 11, port 12 of leaf 1 is connected to port B of server 12, and port 13 of leaf 1 is connected to port 31 of spine 1. Port 21 of leaf 2 is connected to port C of server 21, port 22 of leaf 2 is connected to port D of server 22, and port 23 of leaf 2 is connected to port 32 of spine 1. For example, virtual machines such as VM 1 and VM 2 are deployed on server 12. In this example, an analysis unit, an access location obtaining unit, and an access location storage unit are deployed on server 22.

### Scenario 1

In this scenario, the analysis unit maintains a network device identifier list. The network device identifier list (a list manner is used as an example in this embodiment of this application, and another form may be used in another embodiment, which is not limited in this application) stores identifiers of all network devices (such as MAC addresses of the network devices) in an observation range.

With reference to FIG. 7, the network device identifier list maintained by the analysis unit is shown in Table 3.

**Table 3**

| Serial number | Network device identifier |
|---|---|
| 1 | Device identifier A |
| 2 | Device identifier B |
| 3 | Device identifier C |
| 4 | ... |

Device identifier A is a MAC address and an IP address of spine 1, device identifier B is a MAC address and an IP address of leaf 1, and device identifier C is a MAC address and an IP address of leaf 2. In this embodiment of this application, only an example in which a device identifier includes a MAC address and an IP address is used for description. In another embodiment, the device identifier may further include other identifiers such as a management address and a device name. This is not limited in this application.

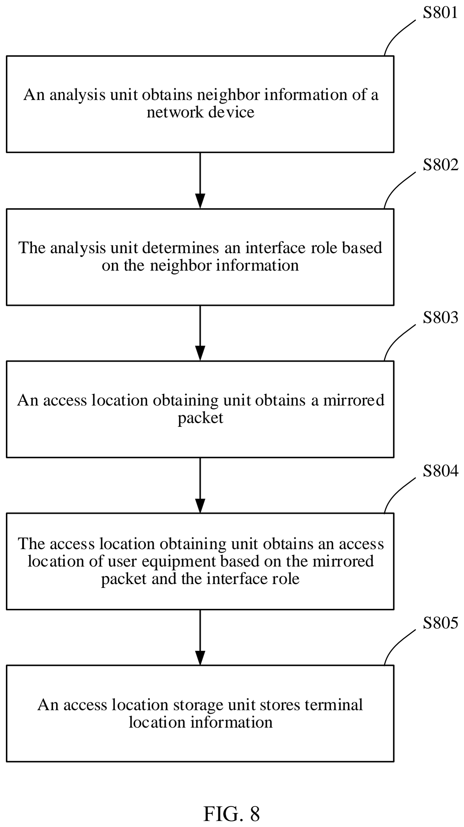

FIG. 8 is an example schematic flowchart of a device access location obtaining method. Refer to FIG. 8. The method specifically includes but is not limited to the following steps.

S801: An analysis unit obtains neighbor information of a network device.

For example, refer to FIG. 7. Leaf 1, leaf 2, and spine 1 periodically obtain LLDP information. For example, LLDP information of leaf 1 includes but is not limited to:
identifier of port 11-device identifier 11-identifier of port A
identifier of port 12-device identifier 12-identifier of port B
identifier of port 13-device identifier A-identifier of port 31

For example, the identifier of port 11 is a MAC address of port 11 of leaf 1, device identifier 11 is a MAC address of server 11, and the identifier of port A is a MAC address of port A of server 11. The corresponding LLDP information indicates that a neighbor device connected to port 11 of leaf 1 is a device indicated by device identifier 11, and a connected port is port A of the neighbor device.

For example, the identifier of port 12 is a MAC address of port 12 of leaf 1, device identifier 12 is a MAC address of server 12, and the identifier of port B is a MAC address of port B of server 12. The corresponding LLDP information indicates that a neighbor device connected to port 12 of leaf 1 is a device indicated by device identifier 12, and a connected port is port B of the neighbor device.

For example, the identifier of port 13 is a MAC address of port 13 of leaf 1, device identifier A is a MAC address of spine 1, and the identifier of port 31 is a MAC address of port 31 of spine 1. The corresponding LLDP information indicates that a neighbor device connected to port 13 of leaf 1 is a device indicated by device identifier A, and a connected port is port 31 of the neighbor device.

LLDP information of leaf 2 includes but is not limited to:
identifier of port 21-device identifier 21-identifier of port A
identifier of port 22-device identifier 22-identifier of port B
identifier of port 23-device identifier A-identifier of port 32

For descriptions of the LLDP information of leaf 2, refer to leaf 1. Details are not described herein again.

LLDP information of spine 1 includes but is not limited to:
identifier of port 31-device identifier B-identifier of port 13
identifier of port 32-device identifier C-identifier of port 23

For example, the identifier of port 31 is a MAC address of port 31 of spine 1, device identifier B is a MAC address of leaf 1, and the identifier of port 13 is a MAC address of port 13 of leaf 1. The corresponding LLDP information indicates that a neighbor device connected to port 31 of spine 1 is a device indicated by device identifier B, and a connected port is port 13 of the neighbor device.

For example, the identifier of port 32 is a MAC address of port 32 of spine 1, device identifier C is a MAC address of leaf 2, and the identifier of port 23 is a MAC address of port 23 of leaf 2. The corresponding LLDP information indicates that a neighbor device connected to port 32 of spine 1 is a device indicated by device identifier C, and a connected port is port 23 of the neighbor device.

For example, the analysis unit sends a neighbor information request message to each network device in a system, to indicate to feed back neighbor information. The analysis unit may receive neighbor information 1 fed back by leaf 1, neighbor information 2 fed back by leaf 2, and neighbor information 3 fed back by spine 1.

Neighbor information 1 includes but is not limited to an identifier of leaf 1 (that is, a MAC address of leaf 1) and LLDP information of leaf 1. Neighbor information 2 includes but is not limited to an identifier of leaf 2 (that is, a MAC address of leaf 2) and LLDP information of leaf 2. Neighbor information 3 includes but is not limited to an identifier of spine 1 (that is, a MAC address of spine 1) and LLDP information of spine 1.

S802: The analysis unit determines an interface role based on the neighbor information.

For example, the analysis unit identifies a port type (that is, an interface role) of each port of the network device based on a network device identifier list and the received neighbor information.

For example, leaf 1 is used as an example. The analysis unit queries the network device identifier list (for example, as shown in Table 3) based on neighbor information corresponding to leaf 1. The analysis unit detects that an identifier of a neighbor device connected to port 11 of leaf 1 (that is, device identifier 11) and an identifier of a neighbor device connected to port 12 of leaf 1 (that is, device identifier 12) are not included in the network device identifier list. The analysis unit determines that the devices connected to port 11 and port 12 of leaf 1 are network devices in a non-observation range. Correspondingly, the analysis unit determines that port types of port 11 and port 12 of leaf 1 are a user-side port type. The analysis unit detects that an identifier of a neighbor device connected to port 13 of leaf 1 (that is, device identifier A) is included in the network device identifier list. The analysis unit determines that the device connected to port 13 of leaf 1 is a network device in an observation range, and further determines that port 13 of leaf 1 is a port of a network-device-side type.

Similar to the processing for leaf 1, the analysis unit separately obtains interface roles of ports of leaf 2 and spine 1. For example, port 21 and port 22 of leaf 2 are ports of a user-side port type, and port 23 of leaf 2 is a port of a network-device-side port type. This is not limited. Port 31 and port 32 of spine 1 are ports of a network-device-side port type. For a specific identification method, refer to the processing for leaf 1, and details are not described herein again.

The analysis unit sends an identifier of the port of the user-side port type and an identifier of a corresponding network device to an access location obtaining unit. The access location obtaining unit maintains a table of a correspondence between a network device port and a port type. The access location obtaining unit updates the received network device identifier and port identifier to the table of the correspondence between a network device port and a port type.

Specifically, as described above, the identifier of the network device maintained by the analysis unit may include but is not limited to an IP address of the network device, a MAC address of the network device, a management address of the network device, and the like. In embodiments of this application, the analysis unit may send an identifier required by the access location obtaining unit to the access location unit. For example, in this example, the device identifier sent by the analysis unit to the access location obtaining unit is the IP address of the network device. After determining that the network device has a port of the user-side port type, the analysis unit may search the network device identifier list for the IP address corresponding to the network device, and send the found IP address of the network device and an identifier of the corresponding port of the user-side port type (for example, a MAC address of the port) to the access location obtaining unit. Optionally, as described above, interface information carried in a mirrored packet may be INDEX information of a receive port. In this example, the analysis unit may also obtain INDEX information corresponding to each port, and send the INDEX information and a MAC address of the port to the access location obtaining unit correspondingly. Optionally, the INDEX information may be requested by the analysis unit from the network device, or may be configured by an administrator. This is not limited in this application. Optionally, the INDEX information may alternatively be obtained as follows: After receiving the mirrored packet and reading the INDEX information in the interface information, the access location obtaining unit sends a request message to a network device indicated by a source IP address of an outer packet of the mirrored packet, and obtains the INDEX information based on a response message (the response message carries a MAC address of a port corresponding to the INDEX information) fed back by the network device. This is not limited in this application.

Correspondingly, the access location obtaining unit writes the obtained network device identifier and port identifier into the table of the correspondence between a network device port and a port type, as shown in Table 4.

**Table 4**

| Serial number | Network device identifier | Port identifier |
|---|---|---|
| 1 | Device identifier B (IP address of leaf 1) | Port 11 |
| 2 | | Port 12 |
| 3 | Device identifier C (IP address of leaf 2) | Port 21 |
| 4 | | Port 22 |
| ... | ... | ... |

In Table 4, device identifier B is an IP address of leaf 1, and device identifier C is an IP address of leaf 2. Entry 1 (that is, serial number 1) in the correspondence table indicates that port 11 of the network device indicated by device identifier B is of the user-side port type. Entry 2 indicates that port 12 of the network device indicated by device identifier B is of the user-side port type. Entry 3 indicates that port 21 of the network device indicated by device identifier C is of the user-side port type. Entry 4 indicates that port 22 of the network device indicated by device identifier C is of the user-side port type. Optionally, the table of the correspondence between a network device port and a port type may alternatively be in the form in Table 2. This is not limited in this application.

S803: The access location obtaining unit obtains a mirrored packet.

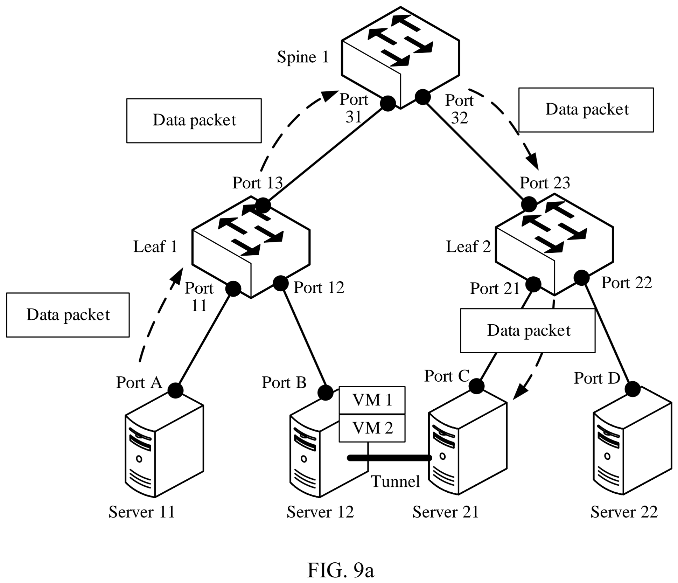

The following describes a mirrored packet transmission manner by using a specific transmission scenario as an example. FIG. 9a is an example schematic flowchart of mirrored packet transmission. Refer to FIG. 9a. In this scenario, a layer 3 forwarding scenario of a data packet is used as an example for description. Specifically, server 11 sends a data packet to leaf 1 through port A, and leaf 1 receives the data packet through port 11, and forwards the data packet to spine 1 through port 13. Spine 1 receives the data packet through port 31, and forwards the data packet to leaf 2 through port 32. Leaf 2 receives the data packet through port 23, and sends the data packet to server 21 through port 21. Server 21 receives the data packet through port C.

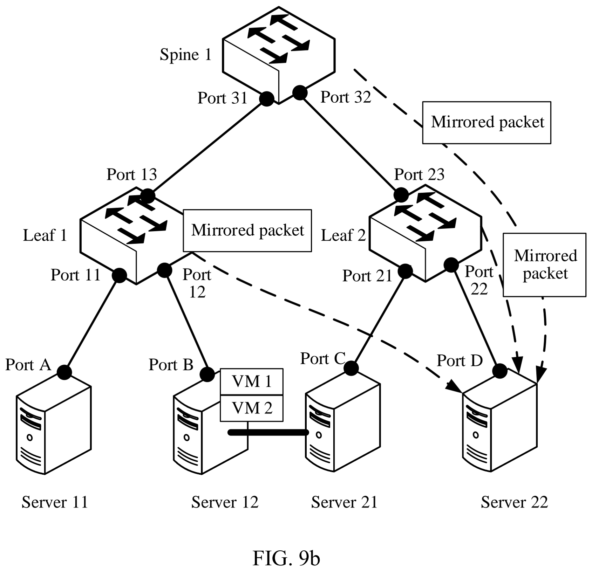

FIG. 9b is an example diagram of mirrored packet transmission. Refer to FIG. 9b. In this example, a packet mirroring function has been configured on all network devices (including leaf 1, spine 1, and leaf 2) in an observation range. Correspondingly, in a data packet transmission process, after receiving a data packet, leaf 1, spine 1, and leaf 2 each generate a mirrored packet based on the data packet, and send the mirrored packet to the access location obtaining unit. In this example, the mirrored packet is an ERSPAN packet. Using leaf 1 as an example, a transmission path of the mirrored packet of leaf 1 is optionally: port 13 of leaf 1 -> port 31 of spine 1 -> port 32 of spine 1 -> port 23 of leaf 2 -> port 22 of leaf 2 -> port D of server 22. Paths of other devices are not described one by one.

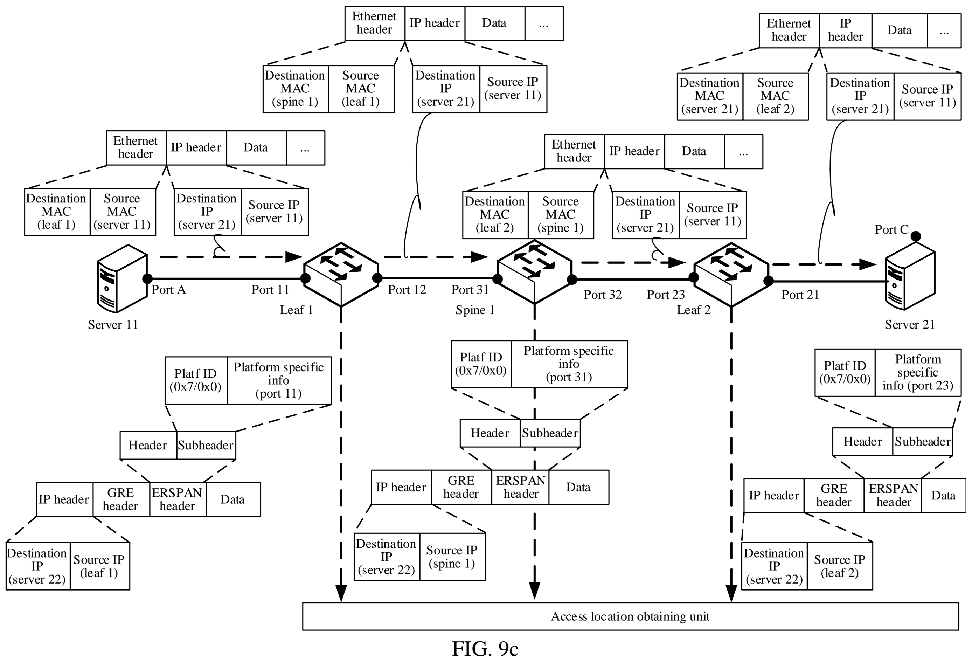

With reference to FIG. 9a and FIG. 9b, FIG. 9c is an example diagram of packet processing. Refer to FIG. 9c. An Ethernet header field in a data packet sent by server 11 carries a destination MAC address (that is, a MAC address of server 12) and a source MAC address (that is, a MAC address of server 11), an IP header field carries a destination IP address (that is, an IP address of server 21) and a source IP address (that is, an IP address of server 11), and a data field carries data. For example, server 11 is an initial transmitter of the data packet.

Leaf 1 receives the data packet through port 11. Leaf 1 re-encapsulates the data packet, and forwards the re-encapsulated data packet to spine 1 through port 13, and leaf 1 generates a mirrored packet based on the data packet. For example, an Ethernet header field of the re-encapsulated data packet carries a destination MAC address (that is, a MAC address of spine 1) and a source MAC address (that is, a MAC address of leaf 1). An IP header field carries a destination IP address (that is, the IP address of server 21) and a source IP address (that is, the IP address of server 11). For example, for leaf 1, server 11 is a transmitter of the data packet.

For example, the mirrored packet of leaf 1 includes an outer packet and an inner packet. The outer packet includes but is not limited to an IP header field, a GRE header field, and an ERSPAN header field. The IP header field of the outer packet includes a destination IP address (that is, an IP address of server 22) and a source IP address (that is, an IP address of leaf 1). The ERSPAN header includes but is not limited to a header field and a subheader field. A Platf ID field in the subheader field carries specified information (that is, 0x7 or 0x0), and a platform specific Info field carries the identifier of port 11 (that is, a MAC address of port 11 of leaf 1, or a port ID, which is not limited in this application), indicating that the mirrored packet is generated by leaf 1 based on the data packet received by port 11. The inner packet is the data field, and the data field carries the data packet received by leaf 1.

Spine 1 receives a data packet through port 31. Spine 1 re-encapsulates the data packet, and forwards the re-encapsulated data packet to leaf 2 through port 32, and spine 1 generates a mirrored packet based on the data packet. For example, an Ethernet header field of the re-encapsulated data packet carries a destination MAC address (that is, a MAC address of leaf 2) and a source MAC address (that is, a MAC address of spine 1). An IP header field carries a destination IP address (that is, the IP address of server 21) and a source IP address (that is, the IP address of server 11). For example, for spine 1, leaf 1 is a transmitter of the data packet.

For example, the mirrored packet of spine 1 includes an outer packet and an inner packet. The outer packet includes but is not limited to an IP header field, a GRE header field, and an ERSPAN header field. The IP header field of the outer packet includes a destination IP address (that is, an IP address of server 22) and a source IP address (that is, an IP address of spine 1). The ERSPAN header includes but is not limited to a header field and a subheader field. A Platf ID field in the subheader field carries specified information (that is, 0x7 or 0x0), and a platform specific Info field carries the identifier of port 31 (that is, a MAC address of port 31 of spine 1, or a port ID, which is not limited in this application), indicating that the mirrored packet is generated by spine 1 based on the data packet received by port 31. The inner packet is the data field, and the data field carries the data packet received by spine 1.

Leaf 2 receives a data packet through port 23. Leaf 2 re-encapsulates the data packet, and forwards the re-encapsulated data packet to server 21 through port 21, and leaf 2 generates a mirrored packet based on the data packet. For example, an Ethernet header field of the re-encapsulated data packet carries a destination MAC address (that is, a MAC address of server 21) and a source MAC address (that is, a MAC address of leaf 2). An IP header field carries a destination IP address (that is, the IP address of server 21) and a source IP address (that is, the IP address of server 11). For example, for leaf 2, spine 1 is a transmitter of the data packet.

For example, the mirrored packet of leaf 2 includes an outer packet and an inner packet. The outer packet includes but is not limited to an IP header field, a GRE header field, and an ERSPAN header field. The IP header field of the outer packet includes a destination IP address (that is, an IP address of server 22) and a source IP address (that is, an IP address of leaf 2). The ERSPAN header includes but is not limited to a header field and a subheader field. A Platf ID field in the subheader field carries specified information (that is, 0x7 or 0x0), and a platform specific Info field carries the identifier of port 23 (that is, a MAC address of port 23 of leaf 2, or a port ID, which is not limited in this application), indicating that the mirrored packet is generated by leaf 2 based on the data packet received by port 23. The inner packet is the data field, and the data field carries the data packet received by leaf 2.

For example, the access location obtaining unit receives mirrored packets sent by a plurality of network devices, including the mirrored packet of leaf 1, the mirrored packet of spine 1, and the mirrored packet of leaf 2.

S804: The access location obtaining unit obtains an access location of user equipment based on the mirrored packet and the interface role.

For example, as described above, the access location obtaining unit maintains the table of the correspondence between a network device port and a port type, where the correspondence table records a port identifier of a port of a user-side port type and an identifier of a corresponding network device. The access location obtaining unit queries the table of the correspondence between a network device port and a port type based on the network device identifier and the interface information in the mirrored packet, to detect whether the receive port identifier in the interface information is included in the table of the correspondence between a network device port and a port type, so as to determine whether a transmitter corresponding to a data packet of a single mirrored packet is user equipment.

Still refer to FIG. 9c. For example, the access location obtaining unit obtains a source IP address in an IP header field of the mirrored packet of leaf 1 (that is, the IP address of leaf 1) and interface information in a platform specific Info field (that is, the MAC address of port 11). The access location obtaining unit performs matching on entries in the table of the correspondence between a network device port and a port type based on the IP address of leaf 1 and the MAC address of port 11. In this example, the IP address of leaf 1 successfully matches the MAC address of port 11, and the access location obtaining unit determines that port 11 of leaf 1 is a port of a user-side port type. Further, the access location obtaining unit may determine that a neighbor device connected to port 11 of leaf 1 (that is, a device connected to port 11) is user equipment, that is, a transmitter corresponding to the data packet received by leaf 1 from port 11 is user equipment. The access location obtaining unit determines leaf 1 as an access point of the user equipment. The access location obtaining unit obtains a source IP address in an IP header field in an inner packet of the mirrored packet of leaf 1 (that is, the IP address of server 11), that is, an identifier of a transmitter corresponding to the data packet received by leaf 1. The access location obtaining unit obtains access location information corresponding to server 11, including but not limited to the IP address of server 11, an access point identifier (that is, the IP address of leaf 1), and a receive port identifier (that is, the MAC address of port 11), where the access location information indicates that server 11 serving as the user equipment accesses port 11 of leaf 1.

Still refer to FIG. 9c. For example, the access location obtaining unit obtains a source IP address in an IP header field of the mirrored packet of spine 1 (that is, the IP address of spine 1) and interface information in a platform specific Info field (that is, the MAC address of port 31). The access location obtaining unit performs matching on entries in the table of the correspondence between a network device port and a port type based on the IP address of spine 1 and the MAC address of port 31. In this example, the IP address of spine 1 fails to match the MAC address of port 31, and the access location obtaining unit determines that port 31 of spine 1 is a port of a network-device-side port type. Further, the access location obtaining unit may determine that a transmitter corresponding to the data packet received by spine 1 from port 31 (that is, a device connected to port 31) is a network device.

Still refer to FIG. 9c. For example, the access location obtaining unit obtains a source IP address in an IP header field of the mirrored packet of leaf 2 (that is, the IP address of leaf 2) and interface information in a platform specific Info field (that is, the MAC address of port 23). The access location obtaining unit performs matching on entries in the table of the correspondence between a network device port and a port type based on the IP address of leaf 2 and the MAC address of port 23. In this example, the IP address of leaf 2 fails to match the MAC address of port 23, and the access location obtaining unit determines that port 23 of leaf 2 is a port of a network-device-side port type. Further, the access location obtaining unit may determine that a transmitter corresponding to the data packet received by leaf 2 from port 23 (that is, a device connected to port 23) is a network device.

In a possible implementation, the access location obtaining unit may also first identify the access point based on the received mirrored packet. After the access point is determined, a related field of the mirrored packet (which is a mirrored packet whose carried interface information indicates that a port is of a user-side port type) from the access point is read to obtain an access location.

S805: An access location storage unit stores access location information of the user equipment.

For example, the access location obtaining unit stores the access location information of server 11 in the access location storage unit. The access location storage unit maintains an access location information list (which may alternatively be in another storage form, and is not limited in this application). The list includes one or more entries, and each entry is used to store access location information of user equipment. The entries include but are not limited to an identifier of the user equipment, an access point identifier, a receive port identifier (that is, an access port identifier), and the like.

The access location obtaining unit (an execution body may alternatively be the access location storage unit, which is not limited in this application) queries the access location information list based on the identifier of server 11 (that is, the IP address of server 11). In an example, if the access location information list does not include the identifier of server 11, that is, the access location information corresponding to server 11 is not stored, the access location obtaining unit stores the access location information of server 11 (including but not limited to the IP address of server 11, an access point identifier (that is, the IP address of leaf 1), and a receive port identifier (that is, the MAC address of port 11)) in the access location information list. In another example, if the access location information list includes the identifier of server 11, that is, the access location information corresponding to server 11 is stored, the access location obtaining unit detects whether the stored access location information is consistent with the currently obtained access location information. If the stored access location information is consistent with the currently obtained access location information, no update is performed. If the stored access location information is inconsistent with the currently obtained access location information, the access location obtaining unit stores the access location information of server 11 (including but not limited to the IP address of server 11, an access point identifier (that is, the IP address of leaf 1), and a receive port identifier (that is, the MAC address of port 11)) in the access location information list. Optionally, the access location obtaining unit correspondingly writes obtaining time of the access location information (for example, time of storage in the access location information list) into the access location information.

### Scenario 2

The application scenario shown in FIG. 7 is still used as an example. In this scenario, a layer 2 forwarding scenario is used as an example for description. An analysis unit and an access location obtaining unit perform S801 and S802. For details, refer to the foregoing descriptions. Details are not described herein again.

In S803, for a transmission path of a data packet and a transmission manner of a mirrored packet, refer to FIG. 9a and FIG. 9b. Details are not described herein again.

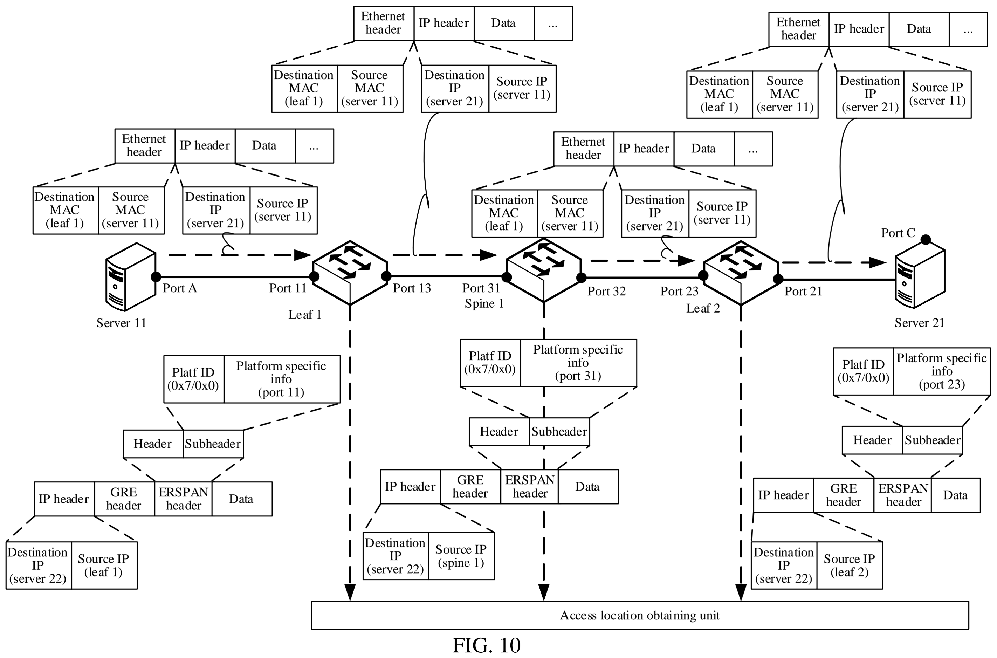

FIG. 10 is an example diagram of packet processing. Refer to FIG. 10. An Ethernet header field in a data packet sent by server 11 carries a destination MAC address (that is, a MAC address of server 12) and a source MAC address (that is, a MAC address of server 11), an IP header field carries a destination IP address (that is, an IP address of server 21) and a source IP address (that is, an IP address of server 11), and a data field carries data. For example, server 11 is an initial transmitter of the data packet.

Leaf 1 receives the data packet through port 11. Leaf 1 forwards the data packet to spine 1 through port 13 (this may also be referred to as transparent transmission), and leaf 1 generates a mirrored packet based on the data packet. For example, the data packet forwarded by leaf 1 is the same as the received data packet (that is, the data packet sent by server 11). For specific descriptions, refer to the foregoing related descriptions. Details are not described herein again.

For example, the mirrored packet of leaf 1 includes an outer packet and an inner packet. The outer packet includes but is not limited to an IP header field, a GRE header field, and an ERSPAN header field. The IP header field of the outer packet includes a destination IP address (that is, an IP address of server 22) and a source IP address (that is, an IP address of leaf 1). The ERSPAN header includes but is not limited to a header field and a subheader field. A Platf ID field in the subheader field carries specified information (that is, 0x7 or 0x0), and a platform specific Info field carries the identifier of port 11 (that is, a MAC address of port 11 of leaf 1, or a port ID, which is not limited in this application), indicating that the mirrored packet is generated by leaf 1 based on the data packet received by port 11. The inner packet is the data field, and the data field carries the data packet received by leaf 1. For example, for leaf 1, server 11 is a transmitter of the data packet.

Spine 1 receives a data packet through port 31. Spine 1 forwards the data packet to leaf 2 through port 32 (this may also be referred to as transparent transmission), and spine 1 generates a mirrored packet based on the data packet. For example, the data packet forwarded by spine 1 is the same as the received data packet (that is, the data packet sent by leaf 1). For specific descriptions, refer to the foregoing related descriptions. Details are not described herein again.

For example, the mirrored packet of spine 1 includes an outer packet and an inner packet. The outer packet includes but is not limited to an IP header field, a GRE header field, and an ERSPAN header field. The IP header field of the outer packet includes a destination IP address (that is, an IP address of server 22) and a source IP address (that is, an IP address of spine 1). The ERSPAN header includes but is not limited to a header field and a subheader field. A Platf ID field in the subheader field carries specified information (that is, 0x7 or 0x0), and a platform specific Info field carries the identifier of port 31 (that is, a MAC address of port 31 of spine 1, or a port ID, which is not limited in this application), indicating that the mirrored packet is generated by spine 1 based on the data packet received by port 31. The inner packet is the data field, and the data field carries the data packet received by spine 1. For example, for spine 1, leaf 1 is a transmitter of the data packet.

Leaf 2 receives a data packet through port 23. Leaf 1 forwards the data packet to server 21 through port 21 (this may also be referred to as transparent transmission), and leaf 2 generates a mirrored packet based on the data packet. For example, the data packet forwarded by leaf 2 is the same as the received data packet (that is, the data packet sent by spine 1). For specific descriptions, refer to the foregoing related descriptions. Details are not described herein again.

For example, the mirrored packet of leaf 2 includes an outer packet and an inner packet. The outer packet includes but is not limited to an IP header field, a GRE header field, and an ERSPAN header field. The IP header field of the outer packet includes a destination IP address (that is, an IP address of server 22) and a source IP address (that is, an IP address of leaf 2). The ERSPAN header includes but is not limited to a header field and a subheader field. A Platf ID field in the subheader field carries specified information (that is, 0x7 or 0x0), and a platform specific Info field carries the identifier of port 23 (that is, a MAC address of port 23 of leaf 2, or a port ID, which is not limited in this application), indicating that the mirrored packet is generated by leaf 2 based on the data packet received by port 23. The inner packet is the data field, and the data field carries the data packet received by leaf 2. For example, for leaf 2, spine 1 is a transmitter of the data packet.

For example, the access location obtaining unit receives mirrored packets sent by a plurality of network devices, including the mirrored packet of leaf 1, the mirrored packet of spine 1, and the mirrored packet of leaf 2.

In this scenario, the mirrored packet of leaf 1, the mirrored packet of spine 1, and the mirrored packet of leaf 2 that are received by the access location obtaining unit are processed according to S803 and S804. Specific details are the same as those in scenario 1, and details are not described herein again.

### Scenario 3

The application scenario shown in FIG. 7 is still used as an example. In this scenario, an analysis unit performs S801 and S802. For specific details of S801, refer to related content in scenario 1. Details are not described herein again.

For example, in an execution process of S802, after determining an interface role based on neighbor information, the analysis unit may send indication information to a network device (for example, leaf 1 and leaf 2) with a port of a user-side port type, to indicate leaf 1 to generate a mirrored packet after receiving a data packet through a port of the user-side port type (that is, port 11 and port) and send the mirrored packet to an access location obtaining unit, and indicate leaf 2 to generate a mirrored packet after receiving a data packet through a port of the user-side port type (that is, port 21 and port 22) and send the mirrored packet to the access location obtaining unit.

In S803, if leaf 1 and leaf 2 receive a data packet through the port of the user-side port type, a corresponding mirrored packet is generated. For example, FIG. 9c is used as an example. In this example, different from the scenario shown in FIG. 9c, leaf 1 sends the mirrored packet to the access location obtaining unit, and spine 1 and leaf 2 each receive a data packet through a port of a network-device-side port type, and therefore do not need to generate a mirrored packet.

In S804, after receiving the mirrored packet sent by leaf 1, the access location obtaining unit may determine that a transmitter (that is, server 11) of an inner packet (that is, a data packet) of the mirrored packet sent by leaf 1 is user equipment. Correspondingly, leaf 1 is an access point of the user equipment. Further, the access location obtaining unit reads the mirrored packet of leaf 1, to obtain access location information of server 11, and stores the access location information in an access location storage unit. For details not described, refer to the foregoing related content. Details are not described herein again.

### Scenario 4

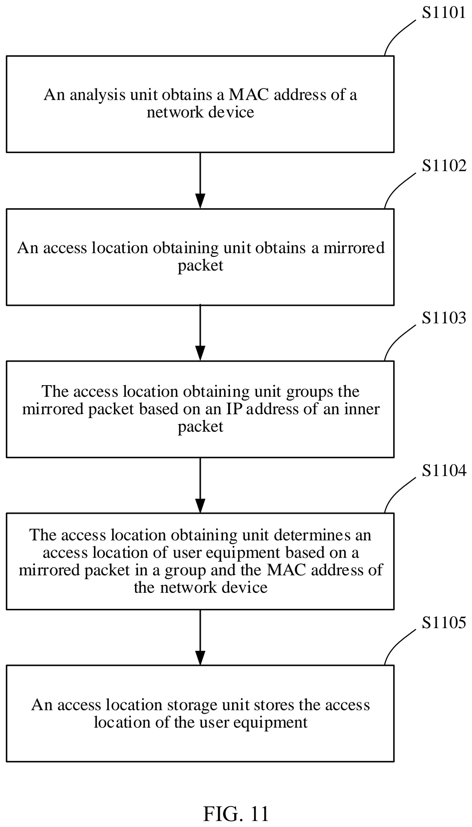

FIG. 11 is an example schematic flowchart of a device access location obtaining method. Refer to FIG. 11. The method specifically includes but is not limited to the following steps.

S1101: An analysis unit obtains a MAC address of a network device.

For example, the analysis unit may obtain an identifier of each network device in a system, for example, a MAC address and an IP address of each network device. The following uses only the MAC address as an example for description.

Optionally, the analysis unit may periodically and automatically collect the MAC address of each network device in the system, and/or an administrator (or an operation and maintenance engineer) may configure the MAC address of each network device in the system for the analysis unit through a user interface provided by the analysis unit.

It should be noted that, in this example, the MAC address of the network device obtained by the analysis unit includes a MAC address of a network device in an observation range, and further includes a MAC address of a network device in a non-observation range. For example, the firewall in FIG. 4 is used as an example. The firewall is a network device in the non-observation range. However, the analysis unit may communicate with the network device, and may obtain a MAC address corresponding to the firewall. Certainly, the MAC address of the firewall may alternatively be configured by the administrator. This is not limited in this application.

Still with reference to the application scenario shown in FIG. 7, in this embodiment of this application, the analysis unit may maintain a network device identifier list. For the list, refer to Table 3. For related descriptions, refer to the foregoing related content. Details are not described herein again.

For example, the analysis unit sends the obtained MAC address of the network device to an access location obtaining unit. As described above, a network device identifier in the network device identifier list may include but is not limited to: a MAC address of a network device, an IP address of the network device, a management address of the network device (the list may not include a management address of a network device such as the firewall in the non-observation range), and the like. In this example, the analysis unit may send only the MAC address to the access location obtaining unit, or certainly may send an identifier of another type. This is not limited in this application.

S1102: The access location obtaining unit obtains a mirrored packet.

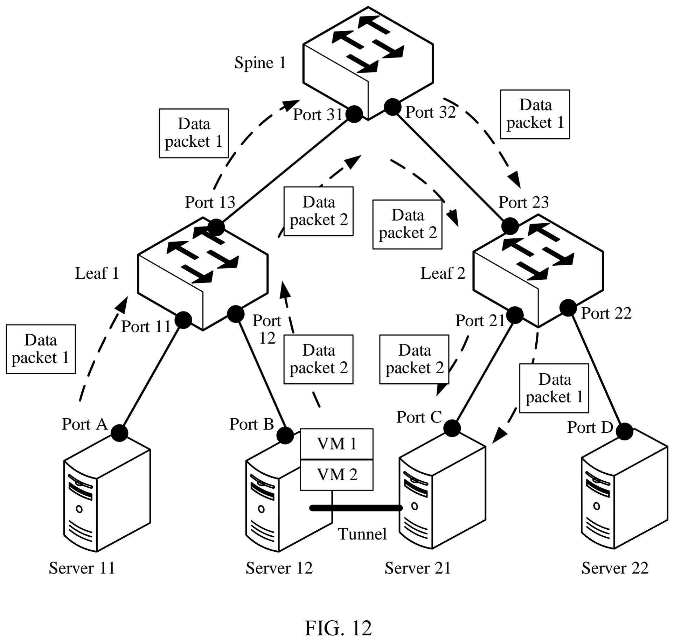

The following describes a mirrored packet transmission manner by using a specific transmission scenario as an example. FIG. 12 is an example schematic flowchart of mirrored packet transmission. Refer to FIG. 12. In this scenario, a layer 3 forwarding scenario of a data packet is used as an example for description. Specifically, server 11 sends data packet 1 to leaf 1 through port A, and leaf 1 receives data packet 1 through port 11, and forwards data packet 1 to spine 1 through port 13. Spine 1 receives data packet 1 through port 31, and forwards data packet 1 to leaf 2 through port 32. Leaf 2 receives data packet 1 through port 23, and sends data packet 1 to server 21 through port 21. Server 21 receives data packet 1 through port C.

Still refer to FIG. 12. Server 12 sends data packet 2 to leaf 1 through port A, and leaf 1 receives data packet 2 through port 12, and forwards data packet 2 to spine 1 through port 13. Spine 1 receives data packet 2 through port 31, and forwards data packet 2 to leaf 2 through port 32. Leaf 2 receives data packet 2 through port 23, and sends data packet 2 to server 21 through port 21. Server 21 receives data packet 2 through port C.

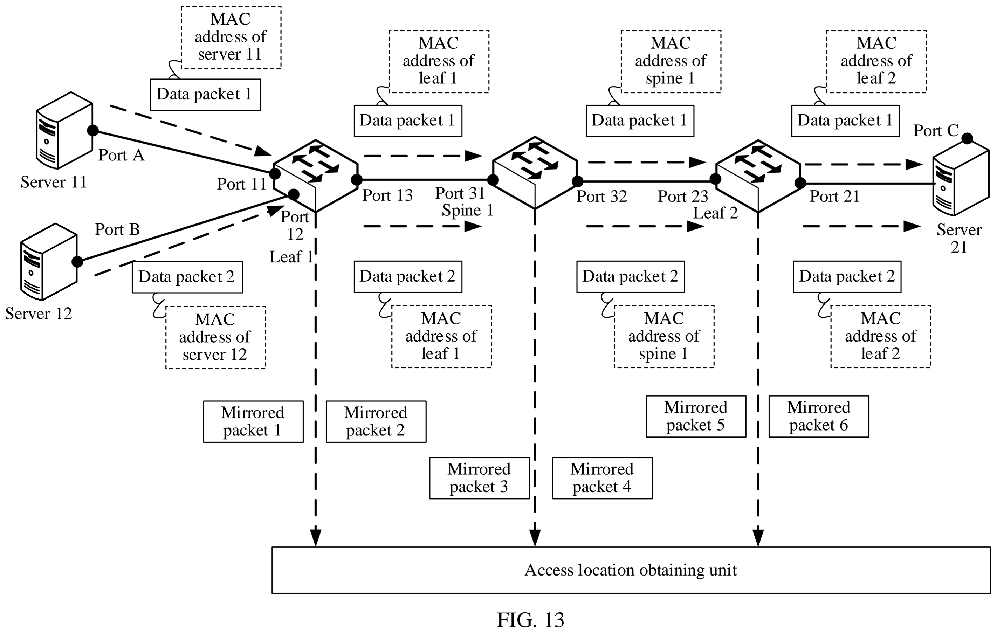

With reference to FIG. 12, FIG. 13 is an example diagram of packet processing. Refer to FIG. 13. An Ethernet header field in data packet 1 sent by server 11 carries a destination MAC address (that is, a MAC address of leaf 1) and a source MAC address (that is, a MAC address of server 11), an IP header field carries a destination IP address (that is, an IP address of server 21) and a source IP address (that is, an IP address of server 11), and a data field carries data. For example, server 11 is an initial transmitter of data packet 1. It should be noted that FIG. 12 shows information carried in some fields. For other fields, refer to related descriptions in FIG. 9c. Details are not described herein again. No repeated description is provided below.

Leaf 1 receives data packet 1 through port 11. Leaf 1 re-encapsulates data packet 1, and forwards re-encapsulated data packet 1 to spine 1 through port 13, and leaf 1 generates mirrored packet 1 based on data packet 1. For example, an Ethernet header field of re-encapsulated data packet 1 carries a destination MAC address (that is, a MAC address of spine 1) and a source MAC address (that is, a MAC address of leaf 1). An IP header field carries a destination IP address (that is, the IP address of server 21) and a source IP address (that is, the IP address of server 11).

For example, mirrored packet 1 of leaf 1 includes an outer packet and an inner packet. The outer packet includes but is not limited to an IP header field, a GRE header field, and an ERSPAN header field. The IP header field of the outer packet includes a destination IP address (that is, an IP address of server 22) and a source IP address (that is, an IP address of leaf 1). The ERSPAN header includes but is not limited to a header field and a subheader field. A Platf ID field in the subheader field carries specified information (that is, 0x7 or 0x0), and a platform specific Info field carries the identifier of port 11 (that is, a MAC address of port 11 of leaf 1, or a port ID, which is not limited in this application), indicating that the mirrored packet is generated by leaf 1 based on the data packet received by port 11. The inner packet is the data field, and the data field carries data packet 1 received by leaf 1. For example, for leaf 1, server 11 is a transmitter of data packet 1.

Spine 1 receives data packet 1 through port 31. Spine 1 re-encapsulates data packet 1, and forwards re-encapsulated data packet 1 to leaf 2 through port 32, and spine 1 generates mirrored packet 3 based on data packet 1. For example, an Ethernet header field of re-encapsulated data packet 1 carries a destination MAC address (that is, a MAC address of leaf 2) and a source MAC address (that is, a MAC address of spine 1). An IP header field carries a destination IP address (that is, the IP address of server 21) and a source IP address (that is, the IP address of server 11).

For example, mirrored packet 3 of spine 1 includes an outer packet and an inner packet. The outer packet includes but is not limited to an IP header field, a GRE header field, and an ERSPAN header field. The IP header field of the outer packet includes a destination IP address (that is, an IP address of server 22) and a source IP address (that is, an IP address of spine 1). The ERSPAN header includes but is not limited to a header field and a subheader field. A Platf ID field in the subheader field carries specified information (that is, 0x7 or 0x0), and a platform specific Info field carries the identifier of port 31 (that is, a MAC address of port 31 of spine 1, or a port ID, which is not limited in this application), indicating that the mirrored packet is generated by spine 1 based on the data packet received by port 31. The inner packet is the data field, and the data field carries data packet 1 received by spine 1. For example, for spine 1, leaf 1 is a transmitter of data packet 1.

Leaf 2 receives data packet 1 through port 23. Leaf 2 re-encapsulates data packet 1, and forwards re-encapsulated data packet 1 to server 21 through port 21, and leaf 2 generates mirrored packet 5 based on data packet 1. For example, an Ethernet header field of re-encapsulated data packet 1 carries a destination MAC address (that is, a MAC address of server 21) and a source MAC address (that is, a MAC address of leaf 2). An IP header field carries a destination IP address (that is, the IP address of server 21) and a source IP address (that is, the IP address of server 11). For example, for leaf 2, spine 1 is a transmitter of data packet 1.

For example, mirrored packet 5 of leaf 2 includes an outer packet and an inner packet. The outer packet includes but is not limited to an IP header field, a GRE header field, and an ERSPAN header field. The IP header field of the outer packet includes a destination IP address (that is, an IP address of server 22) and a source IP address (that is, an IP address of leaf 2). The ERSPAN header includes but is not limited to a header field and a subheader field. A Platf ID field in the subheader field carries specified information (that is, 0x7 or 0x0), and a platform specific Info field carries the identifier of port 23 (that is, a MAC address of port 23 of leaf 2, or a port ID, which is not limited in this application), indicating that the mirrored packet is generated by leaf 2 based on data packet 1 received by port 23. The inner packet is the data field, and the data field carries data packet 1 received by leaf 2.

Still refer to FIG. 13. An Ethernet Hear field in data packet 2 sent by server 12 carries a destination MAC address (that is, a MAC address of server leaf 1) and a source MAC address (that is, a MAC address of server 12), an IP header field carries a destination IP address (that is, an IP address of server 21) and a source IP address (that is, an IP address of server 12), and a data field carries data. For example, server 12 is an initial transmitter of data packet 2. It should be noted that FIG. 12 shows information carried in some fields. For other fields, refer to related descriptions in FIG. 9c. Details are not described herein again. No repeated description is provided below.

Leaf 1 receives data packet 2 through port 12. Leaf 1 re-encapsulates data packet 2, and forwards re-encapsulated data packet 2 to spine 1 through port 13, and leaf 1 generates mirrored packet 2 based on data packet 2. For example, an Ethernet header field of re-encapsulated data packet 2 carries a destination MAC address (that is, a MAC address of spine 1) and a source MAC address (that is, a MAC address of leaf 1). An IP header field carries a destination IP address (that is, the IP address of server 21) and a source IP address (that is, the IP address of server 11). For example, for leaf 1, server 12 is a transmitter of data packet 2.

For example, mirrored packet 2 of leaf 1 includes an outer packet and an inner packet. The outer packet includes but is not limited to an IP header field, a GRE header field, and an ERSPAN header field. The IP header field of the outer packet includes a destination IP address (that is, an IP address of server 22) and a source IP address (that is, an IP address of leaf 1). The ERSPAN header includes but is not limited to a header field and a subheader field. A Platf ID field in the subheader field carries specified information (that is, 0x7 or 0x0), and a platform specific Info field carries the identifier of port 11 (that is, a MAC address of port 12 of leaf 1, or a port ID, which is not limited in this application), indicating that the mirrored packet is generated by leaf 1 based on data packet 2 received by port 12. The inner packet is the data field, and the data field carries data packet 2 received by leaf 1.

Spine 1 receives data packet 2 through port 31. Spine 1 re-encapsulates data packet 2, and forwards re-encapsulated data packet 2 to leaf 2 through port 32, and spine 1 generates mirrored packet 4 based on data packet 2. For example, an Ethernet header field of re-encapsulated data packet 2 carries a destination MAC address (that is, a MAC address of leaf 2) and a source MAC address (that is, a MAC address of spine 1). An IP header field carries a destination IP address (that is, the IP address of server 21) and a source IP address (that is, the IP address of server 12).

For example, mirrored packet 4 of spine 1 includes an outer packet and an inner packet. The outer packet includes but is not limited to an IP header field, a GRE header field, and an ERSPAN header field. The IP header field of the outer packet includes a destination IP address (that is, an IP address of server 22) and a source IP address (that is, an IP address of spine 1). The ERSPAN header includes but is not limited to a header field and a subheader field. A Platf ID field in the subheader field carries specified information (that is, 0x7 or 0x0), and a platform specific Info field carries the identifier of port 31 (that is, a MAC address of port 31 of spine 1, or a port ID, which is not limited in this application), indicating that the mirrored packet is generated by spine 1 based on data packet 2 received by port 31. The inner packet is the data field, and the data field carries data packet 2 received by spine 1. For example, for spine 1, leaf 1 is a transmitter of data packet 2.

Leaf 2 receives data packet 2 through port 23. Leaf 2 re-encapsulates data packet 2, and forwards re-encapsulated data packet 2 to server 21 through port 21, and leaf 2 generates mirrored packet 6 based on data packet 2. For example, an Ethernet header field of re-encapsulated data packet 2 carries a destination MAC address (that is, a MAC address of server 21) and a source MAC address (that is, a MAC address of leaf 2). An IP header field carries a destination IP address (that is, the IP address of server 21) and a source IP address (that is, the IP address of server 12).

For example, mirrored packet 6 of leaf 2 includes an outer packet and an inner packet. The outer packet includes but is not limited to an IP header field, a GRE header field, and an ERSPAN header field. The IP header field of the outer packet includes a destination IP address (that is, an IP address of server 22) and a source IP address (that is, an IP address of leaf 2). The ERSPAN header includes but is not limited to a header field and a subheader field. A Platf ID field in the subheader field carries specified information (that is, 0x7 or 0x0), and a platform specific Info field carries the identifier of port 23 (that is, a MAC address of port 23 of leaf 2, or a port ID, which is not limited in this application), indicating that the mirrored packet is generated by leaf 2 based on data packet 2 received by port 23. The inner packet is the data field, and the data field carries data packet 2 received by leaf 2. For example, for leaf 2, spine 1 is a transmitter of data packet 2.

For example, the access location obtaining unit receives mirrored packets sent by a plurality of network devices, including mirrored packet 1 and mirrored packet 2 of leaf 1, mirrored packet 3 and mirrored packet 4 of spine 1, and mirrored packet 5 and mirrored packet 5 of leaf 2. In this example, it is assumed that the foregoing plurality of mirrored packets are received in a same period. Correspondingly, at a periodic trigger moment, the access location obtaining unit may determine, based on the foregoing plurality of mirrored packets, whether a transmitter of each data packet is user equipment.

S1103: The access location obtaining unit groups the mirrored packet based on an IP address of an inner packet.

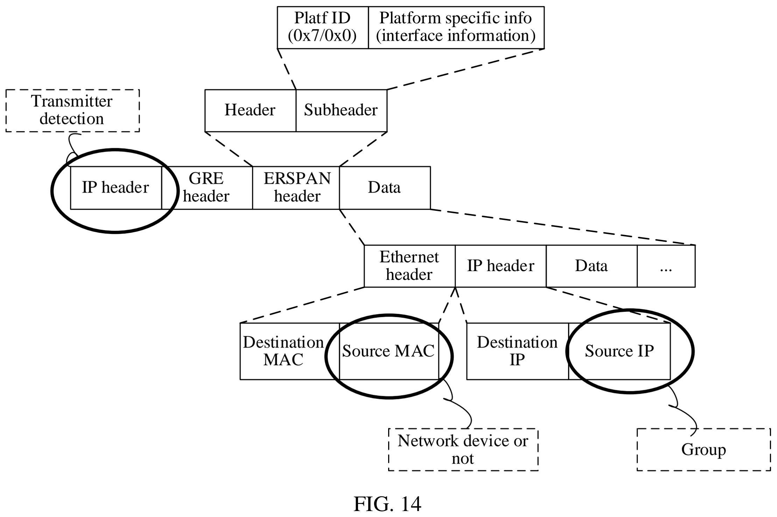

For example, refer to a diagram of a mirrored packet shown in FIG. 14. The access location obtaining unit reads, at the periodic trigger moment, a source IP address in an IP address field of an inner packet of each mirrored packet obtained in this period, that is, an identifier of an initial transmitter of a data packet.

The access location obtaining unit groups the mirrored packet based on the source IP address of the inner packet of each mirrored packet. Mirrored packets with a same source IP address are grouped into one group.

For example, still refer to FIG. 13. In this example, mirrored packet 1, mirrored packet 3, and mirrored packet 5 are all generated based on a same data packet (that is, data packet 1). Correspondingly, source IP addresses of inner packets of mirrored packet 1, mirrored packet 3, and mirrored packet 5 are the same, that is, all are the IP address of server 11. The access location obtaining unit groups mirrored packet 1, mirrored packet 3, and mirrored packet 5 into a same group (for example, mirrored packet group 1).

In addition, mirrored packet 2, mirrored packet 4, and mirrored packet 5 are all generated based on a same data packet (that is, data packet 2). Correspondingly, source IP addresses of inner packets of mirrored packet 2, mirrored packet 4, and mirrored packet 6 are the same, that is, all are the IP address of server 12. The access location obtaining unit groups mirrored packet 2, mirrored packet 4, and mirrored packet 6 into a same group (for example, mirrored packet group 2).

S1104: The access location obtaining unit determines an access location of user equipment based on a mirrored packet in a group and the MAC address of the network device.

For example, still refer to FIG. 14. The access location obtaining unit reads a source MAC address in an Ethernet header field of a mirrored packet in a same group (that is, an identifier of a transmitter of a data packet), and matches the read source MAC address with a MAC address of a network device in a system that is pre-obtained by the access location obtaining unit. The access location obtaining unit filters out a mirrored packet corresponding to a successfully matched source MAC address. That is, a transmitter corresponding to a data packet of the mirrored packet that is filtered out is a network device. Still using the scenario in FIG. 13 as an example, for example, the access location obtaining unit processes mirrored packet group 1 (including mirrored packet 1, mirrored packet 3, and mirrored packet 5), and the access location obtaining unit reads the source MAC address in the Ethernet header field of mirrored packet 1 (that is, the MAC address of server 11), the source MAC address in the Ethernet header field of mirrored packet 3 (that is, the MAC address of leaf 1), and the source MAC address in the Ethernet header field of mirrored packet 5 (that is, the MAC address of spine 1). The access location obtaining unit matches the read source MAC address with the pre-obtained MAC address (as shown in Table 3) of the network device in the system, so as to filter out a mirrored packet whose source MAC address is a MAC address of a network device (including a network device in an observation range and a network device in a non-observation range). The source MAC address in the Ethernet header field of mirrored packet 3 and the source MAC address in the Ethernet header field of mirrored packet 5 are matched successfully, and the access location obtaining unit filters out mirrored packet 3 and mirrored packet 5. If the source MAC address in the Ethernet header field of mirrored packet 1 fails to be matched, mirrored packet 1 remains in filtered mirrored packets in mirrored packet group 1.

Then, refer to FIG. 14. The access location obtaining unit reads a transmitter identifier of each filtered mirrored packet in the group (that is, a remaining mirrored packet in the group), that is, a source IP address in an IP header field of an outer packet of the mirrored packet. The access location obtaining unit detects whether source IP addresses of filtered mirrored packets in the group are the same, that is, detects whether the filtered mirrored packets are all sent by a same network device (that is, the transmitter).

For example, if the source IP addresses of the filtered mirrored packets in the group are the same, that is, the mirrored packets are from the same network device, the access location obtaining unit reads a related field of the mirrored packet to obtain access location information of the user equipment. Specifically, the access location obtaining unit reads a source IP address of an inner packet of any filtered mirrored packet (that is, an IP address of a transmitter (that is, user equipment) of a data packet), interface information in an ERSPAN header field of an outer packet of the mirrored packet (that is, a receive port identifier of an access point), and a source IP address in an IP header field of the outer packet of the mirrored packet (that is, an identifier of the access point). The foregoing information is the access location information of the user equipment. For example, still refer to FIG. 13. In this scenario, the filtered mirrored packet in mirrored packet group 1 is mirrored packet 1. The access location obtaining unit reads a source IP address of an outer packet of mirrored packet 1, and determines that the source IP address is from the same network device (that is, leaf 1). Correspondingly, the access location obtaining unit reads a source IP address of an inner packet of mirrored packet 1 (that is, the IP address of server 11) to obtain an identifier of the user equipment, reads interface information in an ERSPAN header field of the outer packet of mirrored packet 1 (that is, the MAC address of port 11 of leaf 11) to obtain a receive port identifier (which may also be referred to as an access port identifier) of an access point, and reads a source IP address of an IP header field of the outer packet of mirrored packet 1 (that is, the IP address of leaf 1) to obtain an access point identifier.

An example in which the source IP addresses of the filtered mirrored packets in the group are different is described in the following scenario.

In a possible implementation, if a quantity of mirrored packets after filtering is 1, it may be directly determined that a transmitter of a data packet of the mirrored packet is user equipment, and the transmitter of the mirrored packet is the access point of the user equipment. For example, still refer to FIG. 13. In this scenario, mirrored packet 1 remains in filtered mirrored packets in mirrored packet group 1, and the access location obtaining unit may determine that a transmitter of mirrored packet 1 is the access point, and a transmitter of a data packet of mirrored packet 1 is user equipment. Correspondingly, the access location obtaining unit reads a related field of mirrored packet 1 to obtain the access location information of the user equipment (that is, server 11). For details, refer to the foregoing descriptions, and details are not described herein again.

For example, in this scenario, the access location obtaining unit performs the same processing on mirrored packet group 2. For a specific processing procedure, refer to the processing on mirrored packet group 1. The access location obtaining unit may learn that a transmitter (that is, server 12) of the data packet received by leaf 1 is user equipment, and the access location obtaining unit obtains access location information of server 12 by reading mirrored packet 2 of leaf 1, including but not limited to the MAC address of server 12 (that is, a user equipment identifier), the IP address of leaf 1 (that is, an access point identifier), and the MAC address of port 12 of leaf 1 (that is, an access port identifier).

In another possible implementation, if a quantity of mirrored packets received in the period is 1, the procedure in FIG. 8 and/or FIG. 11 still needs to be performed on the mirrored packet, to determine whether a transmitter of a data packet of the mirrored packet is user equipment.

S1105: An access location storage unit stores the access location of the user equipment.

In the scenario shown in FIG. 13, the access location storage unit may store the access location information of server 11 and the access location information of server 12. For specific details, refer to related steps in the foregoing embodiments. Details are not described herein again.

### Scenario 5

With reference to FIG. 10 (that is, a layer 2 forwarding scenario), in this scenario, the access location obtaining method shown in FIG. 11 is used. When S1104 is performed, the access location obtaining unit groups mirrored packets having a same source IP address of inner packets into one group, for example, groups mirrored packets carrying the IP address of server 11 into one group. Then, the access location obtaining unit detects that an identifier of a transmitter of a data packet of each mirrored packet in the group, that is, a source MAC address in an Ethernet header field of an inner packet, does not belong to any network device in a system, and may determine that all data packet transmitters are non-network devices. Further, the access location obtaining unit reads a source IP address of an outer packet of each mirrored packet in the group, and detects that source IP addresses of the mirrored packets are different, that is, point to a plurality of network devices (including leaf 1, spine 1, and leaf 2). Therefore, the access location obtaining unit cannot determine which network device is an access point, and cannot determine a specific data packet whose transmitter is user equipment.

In this example, the analysis unit and the access location obtaining unit may asynchronously perform the access location obtaining procedure in FIG. 8 (for example, the procedure described in scenario 2). Correspondingly, the access location obtaining unit may identify the user equipment and the corresponding access location in the layer 2 forwarding scenario shown in FIG. 10.

It should be noted that when the procedure shown in FIG. 8 and the procedure shown in FIG. 11 are asynchronously performed, periodic trigger moments of the procedures may be the same or different. This is not limited in this application.

### Scenario 6

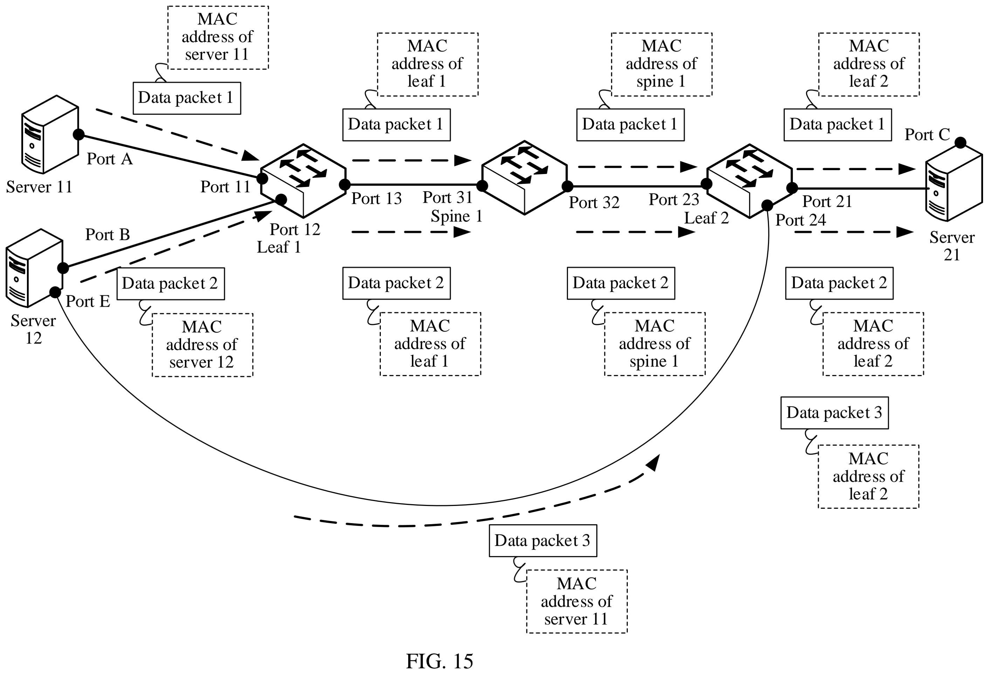

In embodiments of this application, same user equipment may further access two or more network devices. For example, refer to an application scenario shown in FIG. 15. In this scenario, server 12 is connected to port 12 of leaf 1 and port 24 of leaf 2. For other connection relationships, refer to FIG. 12. Details are not described herein again.

In this example, server 11 sends data packet 1. For a transmission manner, refer to the descriptions in FIG. 14. Details are not described herein again. Server 12 sends data packet 2. For a transmission manner, refer to the descriptions in FIG. 14. Details are not described herein again. In addition, server 12 sends data packet 3. Specifically, server 12 sends data packet 3 to leaf 2 through port E, and leaf 2 receives data packet 3 through port 24, and sends data packet 3 to server 21 through port 21. Server 21 receives data packet 3 through port C.

For example, an Ethernet Hear field in data packet 3 sent by server 12 carries a destination MAC address (that is, a MAC address of leaf 2) and a source MAC address (that is, a MAC address of server 12), an IP header field carries a destination IP address (that is, an IP address of server 21) and a source IP address (that is, an IP address of server 12), and a data field carries data. For example, server 12 is an initial transmitter of data packet 3.

Leaf 2 receives data packet 3 through port 24. Leaf 2 re-encapsulates data packet 3, and forwards re-encapsulated data packet 3 to server 21 through port 21, and leaf 2 generates mirrored packet 7 based on data packet 3. For example, an Ethernet header field of re-encapsulated data packet 3 carries a destination MAC address (that is, a MAC address of server 21) and a source MAC address (that is, a MAC address of leaf 2). An IP header field carries a destination IP address (that is, the IP address of server 21) and a source IP address (that is, the IP address of server 12).

For example, mirrored packet 7 (not shown in the figure) of leaf 2 includes an outer packet and an inner packet. The outer packet includes but is not limited to an IP header field, a GRE header field, and an ERSPAN header field. The IP header field of the outer packet includes a destination IP address (that is, an IP address of server 22) and a source IP address (that is, an IP address of leaf 2). The ERSPAN header includes but is not limited to a header field and a subheader field. A Platf ID field in the subheader field carries specified information (that is, 0x7 or 0x0), and a platform specific Info field carries the identifier of port 24 (that is, a MAC address of port 24 of leaf 2, or a port ID, which is not limited in this application), indicating that the mirrored packet is generated by leaf 2 based on data packet 3 received by port 24. The inner packet is the data field, and the data field carries data packet 3 received by leaf 2. For example, for leaf 2, server 12 is a transmitter of data packet 3.

In this scenario, the access location obtaining unit may independently perform the access location obtaining procedure shown in FIG. 8 or FIG. 11, or may asynchronously perform the access location obtaining procedure shown in FIG. 8 or FIG. 11. In this example, the two procedures are performed asynchronously.

For example, the access location obtaining unit performs the procedure shown in FIG. 8, and may identify that server 11 is user equipment, and an access location of server 11 is port 11 of leaf 1. For specific details, refer to the foregoing descriptions. Details are not described herein again. The access location obtaining unit may determine, based on interface information carried in a mirrored packet of leaf 1, that leaf 1 receives the data packet from a port (that is, port 12) of a user-side type, and correspondingly, may determine that a transmitter (that is, server 12) of data packet 2 is user equipment, and a corresponding access location is port 12 of leaf 1. For example, the access location obtaining unit may determine, based on interface information carried in a mirrored packet of leaf 2, that leaf 2 receives the data packet from a port (that is, port 24) of a user-side type. Correspondingly, it may be determined that a transmitter (that is, server 12) of data packet 3 is user equipment, and a corresponding access location is port 24 of leaf 2. That is, the access location obtaining unit may identify two access locations of server 12 in the system.

For example, the access location obtaining unit performs the procedure shown in FIG. 11. The access location obtaining unit may obtain the access location information of server 11. For an obtaining manner, refer to the foregoing descriptions, and details are not described herein again. For example, the access location obtaining unit identifies that source IP addresses of inner packets of mirrored packet 2, mirrored packet 4, mirrored packet 6, and mirrored packet 7 are the same, that is, all are the IP address of server 12. The access location obtaining unit groups mirrored packet 2, mirrored packet 4, mirrored packet 6, and mirrored packet 7 into a same group. The access location obtaining unit filters the mirrored packets based on MAC addresses of the inner packets. Source MAC addresses of inner packets of mirrored packet 2 (for specific descriptions, refer to related content in FIG. 13) and mirrored packet 7 are both the MAC address of server 12, that is, the source MAC addresses of the inner packets of mirrored packet 2 (for specific descriptions, refer to related content in FIG. 13) and mirrored packet 7 both indicate a non-network device. Then, the access location obtaining unit identifies a source IP address of an outer packet of each filtered mirrored packet (that is, mirrored packet 2 and mirrored packet 7). The access location obtaining unit detects that the source IP address of mirrored packet 2 points to leaf 1 (that is, the IP address of leaf 1), and the source IP address of mirrored packet 7 points to leaf 2 (that is, the IP address of leaf 2), that is, the source IP addresses of mirrored packet 2 and mirrored packet 7 point to different network devices, that is, mirrored packet 2 and mirrored packet 7 are from different transmitters. The access location obtaining unit determines that there are a plurality of access points corresponding to server 12. Optionally, the access location obtaining unit may further determine a specific access location of server 12 based on a result obtained in the procedure in FIG. 8.

In a possible implementation, when the procedures in FIG. 11 and FIG. 8 are asynchronously performed, the access location obtaining unit may compare a result obtained in FIG. 8 with a result obtained in FIG. 11. For example, in the scenario shown in FIG. 15, the access location obtaining unit may obtain an access location of server 11 by using the procedures shown in FIG. 11 and FIG. 8, and obtained results are the same. In this case, the access location obtaining unit may determine that the access location of server 11 is interface 11 of leaf 1. However, for the access location of server 12, a result obtained in FIG. 8 is inconsistent with a result obtained in FIG. 11. In this embodiment of this application, a case in which results obtained in the procedures in FIG. 8 and in FIG. 11 are inconsistent may include the case in FIG. 15. In other words, when it is learned in the procedure shown in FIG. 11 that there are a plurality of access locations of the user equipment, the access location of the user equipment may be further obtained with reference to the procedure shown in FIG. 8. In another embodiment, a case in which results obtained in the procedures in FIG. 8 and FIG. 11 are inconsistent may further include a case in which it is determined in FIG. 8 that a transmitter of a data packet is user equipment, and it is determined in FIG. 11 that the transmitter of the data packet is not user equipment (that is, a network device). For details, refer to scenario 7.

### Scenario 7

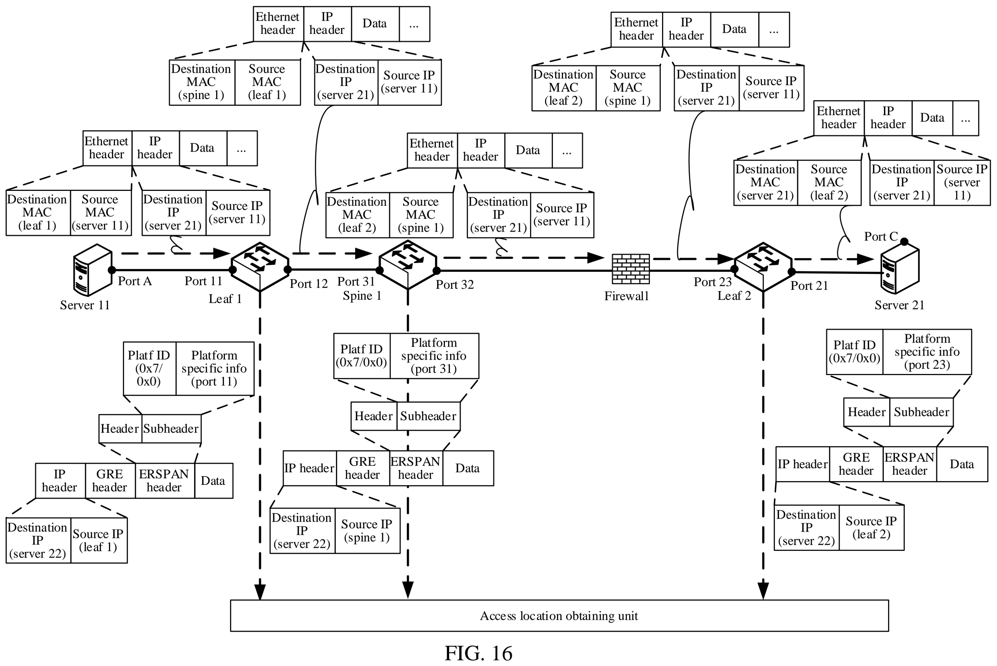

FIG. 16 is an example diagram of an application scenario. Refer to FIG. 16. With reference to the scenario shown in FIG. 13, in the scenario shown in FIG. 16, a firewall is disposed between spine 1 and leaf 2. A data packet sent by server 11 is sent to the firewall through spine 1, and the firewall performs processing such as security verification on the data packet, and then sends the data packet to leaf 2. In this embodiment of this application, an example in which the firewall forwards the data packet in a transparent transmission manner, that is, does not change a MAC address in the data packet is used for description. In another embodiment, the firewall may alternatively re-encapsulate the data packet. This is not limited in this application.

In this scenario, an analysis unit and an access location obtaining unit may perform the access location obtaining method in FIG. 8 and/or FIG. 11.

In a possible implementation, in a process in which the analysis unit and the access location obtaining unit perform the access location obtaining method shown in FIG. 8, in S801, because the firewall does not send LLDP information in this example, correspondingly, spine 1 cannot obtain LLDP information corresponding to interface 32. In this example, neighbor information of spine 1 obtained by the analysis unit includes but is not limited to:
identifier of port 31-device identifier B-identifier of port 13

Correspondingly, in S802, the analysis unit determines, based on the neighbor information of spine 1, that port 32 is an air interface, or determines that a neighbor device connected to port 32 is a network device in a non-observation range. As described above, an identifier of the neighbor device connected to the port does not belong to a port of a network device in an observation range, and a port type of the port is a user-side port type. Correspondingly, the analysis unit determines that port 32 of spine 1 is a port of the user-side port type. Similarly, port 23 of leaf 2 is also determined as a port of the user-side port type. For other details in S801 and S802 that are not described, refer to the foregoing descriptions. Details are not described herein again.

Still refer to FIG. 16. In S803, the access location obtaining unit may receive mirrored packets sent by leaf 1, spine 1, and leaf 2. For specific descriptions, refer to scenario 1. Details are not described herein again.

It should be noted that, in FIG. 16, for leaf 2, the firewall is a transmitter of a data packet received by leaf 2.

In S804, the access location obtaining unit may determine that leaf 1 is an access point of server 11, and obtain access location information of server 11. For specific details, refer to the foregoing descriptions. Details are not described herein again. For example, the access location obtaining unit determines, based on interface information carried in the mirrored packet of leaf 2, that port 23 is a port of the user-side port type. Correspondingly, the access location obtaining unit may determine that a neighbor device connected to port 23 is user equipment, that is, a transmitter corresponding to a data packet received by leaf 2 through port 23 is user equipment.

For example, the access location obtaining unit reads the mirrored packet of leaf 2, and obtains an identifier of the user equipment (a source IP address carried in an inner packet of the mirrored packet, that is, the IP address of server 11), an access point identifier (a source IP address carried in an outer packet of the mirrored packet, that is, the IP address of leaf 2), and a receive port identifier (interface information carried in the outer packet of the mirrored packet, that is, the MAC address of port 23). That is, an access location of server 11 is port 23 of leaf 2. That is, in the scenario shown in FIG. 16, the access location obtaining unit detects, by performing the procedure shown in FIG. 8, that a transmitter corresponding to the data packet received by leaf 1 from port 11 is user equipment, and a transmitter corresponding to the data packet received by leaf 2 from port 23 is also the user equipment.

In another possible implementation, the analysis unit and the access location obtaining unit perform the procedure shown in FIG. 11. After the access location obtaining unit performs a grouping operation (for specific details, refer to the foregoing descriptions, and details are not described herein again), it is determined, based on a source MAC address carried in an inner packet in a mirrored packet of leaf 2 (that is, the MAC address of spine 1), that a transmitter of a data packet received by leaf 2 is a network device in an observation range, that is, the source MAC address carried in the inner packet in the mirrored packet of leaf 2 is included in a MAC address of a network device in a system that is pre-obtained by the access location obtaining unit. Correspondingly, the access location obtaining unit may determine, based on an execution result of the procedure shown in FIG. 11, that a transmitter corresponding to a data packet received by leaf 2 from port 23 is not user equipment. This result is inconsistent with the execution result in FIG. 8. In this case, the access location obtaining unit uses the execution result in FIG. 11, that is, determines that a transmitter (that is, the firewall) corresponding to the data packet received by leaf 2 from port 23 is not user equipment.

### Scenario 8

The access location obtaining method in embodiments of this application may be further applied to a user equipment migration scenario. The scenario shown in FIG. 7 is still used as an example. For example, it is assumed that server 11 migrates from port 11 of leaf 1 to port 25 of leaf 2, that is, server 11 accesses a system through port 25 of leaf 2, to communicate with another device in the system.

In this example, after server 11 is disconnected from leaf 1, leaf 1 sends LLDP information to each network device in the system, where the LLDP information indicates that port 11 of leaf 1 is an empty port. After server 11 is connected to port 25 of leaf 2, leaf 2 may send LLDP information to each network device in the system, where the LLDP information indicates that port 25 of leaf 2 is connected to server 11.

In a possible implementation, an analysis unit performs the procedure in FIG. 8. In an example, leaf 1 and leaf 2 detect an update of LLDP information, and may send neighbor information update information to the analysis unit. The neighbor information update information of leaf 1 indicates that port 11 is an empty port. The neighbor information update information of leaf 2 includes but is not limited to an identifier of port 25 (that is, a MAC address of port 25), a neighbor device identifier (that is, a MAC address of server 11), and a port identifier of a neighbor device (that is, port A of server 11). The neighbor information update information of leaf 2 indicates that port A of server 11 is connected to port 25 of leaf 2. The analysis unit may update locally stored neighbor information. In another example, the analysis unit may alternatively request neighbor information from each network device in the system at a periodic trigger moment. The analysis unit may update locally stored neighbor information based on neighbor information fed back by leaf 1 and leaf 2.

For example, the analysis unit may perform S802 to S805 based on the new neighbor information. In this example, a data packet of server 11 is sent to leaf 2. Leaf 2 receives, through port 25, the data packet sent by server 11, forwards the data packet, and generates and sends a corresponding mirrored packet based on the data packet. Correspondingly, when performing S804, the access location obtaining unit may learn that an access location of server 11 is port 25 of leaf 2. The access location obtaining unit may detect, based on the identifier of server 11, that the identifier of server 11 already exists in an access location information list, and that stored access location information corresponding to server 11 is different from the currently obtained access location information. Correspondingly, the access location obtaining unit may write the newly obtained access location information of server 11 into the access location information list, and correspondingly write a current moment (that is, writing time of the access location information). In this way, in a fault removal scenario, an administrator may obtain a migration status (including a migrated access point and corresponding time) of server 11.

In another possible implementation, the analysis unit and the access location unit perform the procedure in FIG. 11. In a process of performing the procedure, a MAC address of a network device in an observation range maintained by the analysis unit remains unchanged. When performing S1104, the access location obtaining unit may determine an access location of server 11 based on a plurality of mirrored packets corresponding to a data packet sent by server 11. For specific implementation details, refer to the descriptions in FIG. 11, and details are not described herein again.

### Scenario 9

The access location obtaining method in embodiments of this application may be further applied to a scenario in which user equipment is a virtual machine. The scenario in FIG. 7 is still used as an example. In this example, VM 1 in server 12 sends an original data packet. For a format of the original data packet, refer to the tunnel inner packet in FIG. 6a. An OVS in server 12 re-encapsulates the original data packet of VM 1. For a format of a re-encapsulated data packet (which may also be referred to as a tunnel packet), refer to FIG. 6a. In a process of transmitting the data packet (that is, a tunnel packet) of server 12, a network device in an observation range on a transmission path sends a mirrored packet to an access location obtaining unit. For a format of the mirrored packet, refer to FIG. 6b.

In a possible implementation, the access location obtaining unit performs S804 in FIG. 8 in response to the received mirrored packet (for S801 to S803, refer to the foregoing descriptions, and details are not described herein again). The access location obtaining unit determines, based on interface information of the mirrored packet, whether a transmitter of the data packet is user equipment. Specific details are the same as those in S804, and details are not described herein again. For example, the access location obtaining unit determines that a transmitter corresponding to a data packet received by leaf 1 is user equipment, and may obtain access location information corresponding to the user equipment. Specifically, the access location obtaining unit reads a source IP address (that is, a user equipment identifier) carried in a tunnel inner packet in an inner packet (that is, a tunnel packet) of a mirrored packet of leaf 1, and a source IP address (that is, an identifier of leaf 1) and interface information (that is, a receive port identifier) carried in an outer packet of the mirrored packet, so as to obtain the access location information corresponding to server 11.

In another possible implementation, the access location obtaining unit performs S1104 in FIG. 11 in response to the received mirrored packet (S1101 to S1103 are the same as those in FIG. 11, and details are not described herein again). In this step, the access location obtaining unit groups mirrored packets based on source IP addresses carried in tunnel inner packets of inner packets (that is, tunnel packets or data packets) of the mirrored packets, that is, groups mirrored packets whose source IP addresses are an IP address of VM 1 into a same group. In a tunnel packet transmission process, each network device updates an Ethernet header in a tunnel outer packet. Correspondingly, the access location obtaining unit may filter the mirrored packets based on source MAC addresses (that is, transmitter identifiers of data packets) carried in tunnel outer packets in the inner packets in the mirrored packets. For a specific filtering manner, refer to the foregoing descriptions, and details are not described herein again. Then, the access location obtaining unit determines an access location of the user equipment based on a source IP address of an outer packet of a filtered mirrored packet (that is, an IP address of a transmitter of the mirrored packet). For specific details, refer to the descriptions in FIG. 11. Details are not described herein again.

In this way, the access location obtaining method in embodiments of this application may be applied to a transmission scenario of a tunnel data packet, that is, corresponding to user equipment such as a virtual machine that accesses the system by using a tunnel protocol, which may also be accurately located.

### Scenario 10

In embodiments of this application, the system further includes some network devices in a non-observation range, for example, a network device deployed on a user side. The scenario shown in FIG. 4 is used as an example. Router X is a network device in the non-observation range, that is, a router deployed on the user side.

In a possible implementation, in a process of performing the procedure shown in FIG. 8, if an analysis unit obtains neighbor information of leaf 3, and detects that an identifier of router X does not belong to a network device in the observation range, it may be determined that a port of leaf 3 connected to router X is of a user-side port type. In this example, it is assumed that server 41 sends a data packet to router X, and router X forwards the data packet to leaf 3. Leaf 3 forwards the received data packet, and generates and sends a mirrored packet. The access location obtaining unit may determine, based on the mirrored packet of leaf 3, that a transmitter (which refers to router X herein) of the data packet received by leaf 3 is user equipment. That is, a receive port corresponding to the data packet of the mirrored packet of leaf 3 is of the user-side port type, and correspondingly, a neighbor device connected to the receive port, that is, the transmitter of the data packet, is user equipment.

The access location obtaining unit reads a source IP address carried in an inner packet of the mirrored packet of leaf 3, where the source IP address is an IP address of server 41. Correspondingly, an access location of the user equipment obtained by the access location obtaining unit by reading a related field of the mirrored packet (for details, refer to the foregoing descriptions) is an access location of server 41. Access location information of server 41 includes but is not limited to an identifier of server 41, an identifier of leaf 3 (that is, an access point identifier), and a receive port identifier (that is, an identifier of a connection port between leaf 3 and router X). That is, in this scenario, access locations of server 41 to server 4n are the same, and access ports corresponding to access points that are leaf 3 are all connection ports between leaf 3 and router X. In this example, it may be understood that, for a network side, router X is a user-side device. Correspondingly, access locations of server 41 to server 4n may alternatively be understood as an access location of router X in a system.

In another possible implementation, in a process of performing the procedure shown in FIG. 11, the data packet sent by server 41 is still used as an example. The access location obtaining unit groups mirrored packets that carry the IP address of server 41 in mirrored packets into a same group. Then, the access location obtaining unit filters the mirrored packets based on source MAC addresses carried in inner packets of the mirrored packets in the group. A source MAC address carried in an inner packet of the mirrored packet of leaf 3 is the MAC address of router X, and the MAC address does not belong to a network device on a network side. The access location obtaining unit may perform subsequent steps on the corresponding mirrored packet carrying the MAC address of router X. Similarly, the access location obtaining unit may determine that leaf 3 is an access point of the user equipment, and obtain access location information of the user equipment by reading a related field of the mirrored packet of leaf 3. Similarly, the access location information of the user equipment obtained by the access location obtaining unit means access location information corresponding to server 41 (for specific details, refer to the foregoing descriptions, and details are not described herein again).

The foregoing mainly describes the solutions provided in embodiments of this application from a perspective of interaction between network elements. It may be understood that, to implement the foregoing functions, the apparatus includes a corresponding hardware structure and/or software module for performing the functions. A person skilled in the art should be easily aware that, with reference to the example units and algorithm steps described in the embodiments disclosed in this specification, embodiments of this application can be implemented in a form of hardware or a combination of hardware and computer software. Whether a function is performed by hardware or hardware driven by computer software depends on particular applications and design constraints of the technical solutions. A person skilled in the art may use different methods to implement the described functions for each particular application, but it should not be considered that the implementation goes beyond the scope of this application.

In embodiments of this application, an apparatus may be divided into functional modules based on the foregoing method examples. For example, each functional module may be obtained through division based on each corresponding function, or two or more functions may be integrated into one processing module. The integrated module may be implemented in a form of hardware, or may be implemented in a form of a software functional module. It should be noted that division into the modules in embodiments of this application is an example, and is merely logical function division. In actual implementation, there may be another division manner.

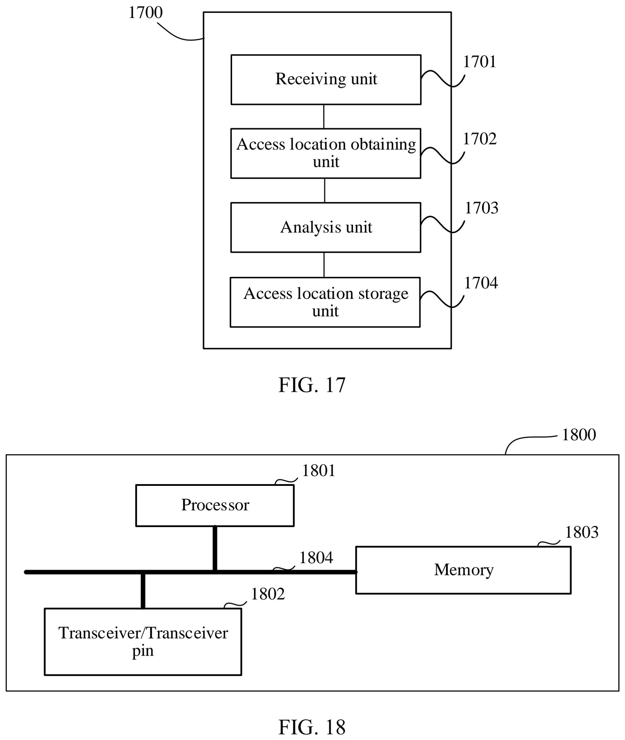

When each functional module is obtained through division based on each corresponding function, or when each functional module is obtained through division based on each corresponding function, FIG. 17 is a diagram of a possible structure of an apparatus 1700 in the foregoing embodiments. As shown in FIG. 17, the apparatus 1700 includes but is not limited to a receiving unit 1701 and an access location obtaining unit 1702. The receiving unit 1701 is configured to receive a mirrored packet sent by a network device. The mirrored packet is generated by the network device based on a received data packet, the mirrored packet includes an identifier of the network device, a receive port identifier, and the data packet, the data packet includes an identifier of a transmitter of the data packet, and the receive port identifier indicates a receive port for the network device to receive the data packet. The access location obtaining unit 1702 is configured to determine, based on the mirrored packet, whether the transmitter of the data packet is user equipment. The access location obtaining unit 1702 is further configured to obtain access location information of the user equipment if it is determined that the transmitter is user equipment, where the access location information includes the identifier of the transmitter, the identifier of the network device, and the receive port identifier.

In a possible implementation, the access location obtaining unit 1702 is specifically configured to determine, based on the receive port identifier in the mirrored packet, whether the transmitter of the data packet is user equipment.

In a possible implementation, the access location obtaining unit 1702 is specifically configured to determine, based on the identifier of the transmitter in the mirrored packet, whether the transmitter of the data packet is user equipment.

In a possible implementation, a port type of the receive port is a user-side port type.

In a possible implementation, the access location obtaining unit 1702 is specifically configured to determine, in response to the received mirrored packet, that the transmitter of the data packet is user equipment.

In a possible implementation, the apparatus further includes an analysis unit 1703, configured to: determine at least one network device in a network based on first information, where the first information includes a port identifier of a port of each network device in the network and a corresponding port type, the port type includes the user-side port type and a network-device-side port type, and each of the at least one network device includes a port of the user-side port type; and send indication information to the at least one network device, where the indication information indicates each of the at least one network device to generate a mirrored packet based on a data packet received by the port of the user-side interface type of each network device.

In a possible implementation, the access location obtaining unit 1702 is specifically configured to: determine a port type of the receive port based on first information and the receive port identifier, where the first information includes a port identifier of a port of each network device in a network and a corresponding port type, and the port type includes a user-side port type and a network-device-side port type; and if the port type of the receive port is the user-side port type, determine that the transmitter is user equipment; or if the port type of the receive port is the network-device-side port type, determine that the transmitter is not user equipment.

In a possible implementation, the apparatus further includes the analysis unit 1703, specifically configured to: obtain second information, where the second information includes identifiers of a plurality of network devices in the network; obtain neighbor information of each of the plurality of network devices, where each piece of neighbor information includes an identifier of a source network device, a source network device port identifier, and an identifier of a neighbor device, the source network device is a device that sends the neighbor information, the neighbor device is a device physically connected to the source network device, and the source network device port identifier indicates a port that is of the source network device and that is connected to the neighbor device; and determine a port type of a port of each network device based on the second information and the neighbor information, where an identifier of a neighbor device connected to a port whose port type is the network-device-side port type is included in the second information, and an identifier of a neighbor device connected to a port whose port type is the user-side port type is not included in the second information.

In a possible implementation, the receiving unit 1701 is specifically configured to: receive a plurality of mirrored packets, where the plurality of mirrored packets are from one or more network devices; and the identifier of the transmitter includes an IP address of the transmitter and a MAC address of the transmitter, and the access location obtaining unit 1702 is specifically configured to: if transmitter IP addresses carried in N mirrored packets in the plurality of mirrored packets are the same, none of transmitter MAC addresses carried in the N mirrored packets is included in second information, and network device identifiers carried in the N mirrored packets indicate a same network device, determine that the transmitter is user equipment, where the second information includes identifiers of a plurality of network devices in a network.

In a possible implementation, the access location obtaining unit 1702 is specifically configured to: if transmitter IP addresses carried in M mirrored packets in the plurality of mirrored packets are the same, none of transmitter MAC addresses carried in the M mirrored packets is included in the second information, and network device identifiers carried in the M mirrored packets indicate two or more network devices, determine, based on the receive port identifier in the mirrored packet, whether the transmitter of the data packet is user equipment.

In a possible implementation, the access location obtaining unit 1702 is specifically configured to: determine, based on the receive port identifier and the identifier of the transmitter in the mirrored packet, whether the transmitter of the data packet is user equipment; and if a determining result based on the receive port identifier indicates that the transmitter is user equipment, and a determining result based on the identifier of the transmitter indicates that the transmitter is not user equipment, determine that the transmitter is not user equipment.

In a possible implementation, the apparatus further includes: an access location storage unit 1704, configured to query user equipment access information based on the identifier of the transmitter, where the user equipment access information includes access location information of at least one user equipment; and the access location storage unit 1704 is further configured to: if the user equipment access information includes access location information of user equipment corresponding to the identifier of the transmitter, and stored access location information is inconsistent with the currently obtained access location information, update the access location information that is of the user equipment corresponding to the identifier of the transmitter and that is in the user equipment access information.

In another example, FIG. 18 is a block diagram of an apparatus 1800 according to an embodiment of this application. The apparatus 1800 may include a processor 1801 and a transceiver/transceiver pin 1802, and optionally, further include a memory 1803. The processor 1801 may be configured to perform steps performed by the analysis unit, the access location obtaining unit, and the access location storage unit in the methods in the foregoing embodiments, control a receiving pin to receive a signal, and control a sending pin to send a signal.

The components of the apparatus 1800 are coupled together by using a bus 1804. In addition to a data bus, the bus system 1804 further includes a power bus, a control bus, and a status signal bus. However, for clear description, various buses are referred to as the bus system 1804 in the figure.

Optionally, the memory 1803 may be configured to store instructions in the foregoing method embodiments.

It should be understood that the apparatus 1800 according to this embodiment of this application may correspond to the analysis unit, the access location obtaining unit, the access location storage unit, and the server to which the units belong in the methods in the foregoing embodiments. In addition, the foregoing and other management operations and/or functions of the elements in the apparatus 1800 are separately used to implement corresponding steps of the foregoing methods. For brevity, details are not described herein again.

All related content of each step in the foregoing method embodiment may be cited to a function description of a corresponding functional module, and details are not described herein again.

Based on a same technical concept, an embodiment of this application further provides a computer-readable storage medium. The computer-readable storage medium stores a computer program, the computer program includes at least one segment of code, and the at least one segment of code may be executed by a computer, to control the computer to implement the foregoing method embodiments.

Based on a same technical concept, an embodiment of this application further provides a computer program. When the computer program is executed by a computer, the computer program is used to implement the foregoing method embodiments.

The program may be completely or partially stored in a storage medium packaged with a processor, or may be partially or completely stored in a memory not packaged with a processor.

Based on a same technical concept, an embodiment of this application further provides a processor. The processor is configured to implement the foregoing method embodiments. The processor may be a chip.

The method or algorithm steps described with reference to the content disclosed in embodiments of this application may be implemented in a hardware manner, or may be implemented in a manner in which a processor executes software instructions. The software instruction may include a corresponding software module. The software module may be stored in a random access memory (Random Access Memory, RAM), a flash memory, a read-only memory (Read-Only Memory, ROM), an erasable programmable read-only memory (Erasable Programmable ROM, EPROM), an electrically erasable programmable read-only memory (Electrically EPROM, EEPROM), a register, a hard disk, a removable hard disk, a compact disc read-only memory (CD-ROM), or any other form of storage medium well known in the art. An example storage medium is coupled to a processor, so that the processor can read information from the storage medium and can write information into the storage medium. Certainly, the storage medium may alternatively be a part of the processor. The processor and the storage medium may be located in an ASIC.

A person skilled in the art should be aware that in the foregoing one or more examples, functions described in embodiments of this application may be implemented by hardware, software, firmware, or any combination thereof. When implemented by software, these functions may be stored in a computer-readable medium or transmitted as one or more instructions or code on the computer-readable medium. The computer-readable medium includes a computer storage medium and a communication medium. The communication medium includes any medium that facilitates transfer of a computer program from one place to another. The storage medium may be any usable medium accessible to a general-purpose or dedicated computer.

The term "and/or" in this specification is merely an association relationship of associated objects, and indicates that three relationships may exist. For example, A and/or B may indicate the following three cases: Only A exists, both A and B exist, and only B exists.

The terms "first" and "second" in the specification and claims of embodiments of this application are used to distinguish between different objects, but are not used to describe a specific sequence of objects. For example, a first target object and a second target object are used to distinguish between different target objects, but are not used to describe a specific sequence of the target objects.

In embodiments of this application, words such as "example" or "for example" are used to represent giving examples, illustrations, or descriptions. Any embodiment or design solution described as "example" or "for example" in embodiments of this application should not be construed as being more preferred or advantageous than other embodiments or design solutions. Specifically, the words such as "example" or "for example" are used to present related concepts in a specific manner.

In descriptions of embodiments of this application, unless otherwise stated, "a plurality of" means two or more. For example, a plurality of processing units refer to two or more processing units, and a plurality of systems refer to two or more systems.

Embodiments of this application are described above with reference to the accompanying drawings. However, this application is not limited to the foregoing specific implementations. The foregoing specific implementations are merely an example but not a limitation. Many forms that can be made by a person of ordinary skill in the art without departing from the principle of this application and the protection scope of the claims fall within the protection scope of this application.

## Claims

1. A device access location obtaining method, comprising:
receiving a mirrored packet sent by a network device, wherein the mirrored packet is generated by the network device based on a received data packet, the mirrored packet comprises the data packet or partial content of the data packet, an identifier of the network device, and a receive port identifier, the data packet in the mirrored packet or the partial content of the data packet in the mirrored packet comprises an identifier of a transmitter of the data packet, and the receive port identifier indicates a receive port for the network device to receive the data packet;
determining, based on the mirrored packet, whether the transmitter of the data packet is user equipment; and
obtaining access location information of the user equipment if it is determined that the transmitter is user equipment, wherein the access location information comprises the identifier of the transmitter, the identifier of the network device, and the receive port identifier.

2. The method according to claim 1, wherein the determining, based on the mirrored packet, whether the transmitter of the data packet is user equipment comprises:
determining, based on the receive port identifier in the mirrored packet, whether the transmitter of the data packet is user equipment.

3. The method according to claim 1, wherein the determining, based on the mirrored packet, whether the transmitter of the data packet is user equipment comprises:
determining, based on the identifier of the transmitter in the mirrored packet, whether the transmitter of the data packet is user equipment.

4. The method according to claim 1, wherein a port type of the receive port is a user-side port type.

5. The method according to claim 4, wherein the determining, based on the mirrored packet, whether the transmitter of the data packet is user equipment comprises:
determining, in response to the received mirrored packet, that the transmitter of the data packet is user equipment.

6. The method according to claim 4, wherein before the receiving a mirrored packet sent by a network device, the method further comprises:
determining at least one network device in a network based on first information, wherein the first information comprises a port identifier of a port of each network device in the network and a corresponding port type, the port type comprises the user-side port type and a network-device-side port type, and each of the at least one network device comprises a port of the user-side port type; and
sending indication information to the at least one network device, wherein the indication information indicates each of the at least one network device to generate a mirrored packet based on a data packet received by the port of the user-side interface type of each network device.

7. The method according to claim 2, wherein the determining, based on the receive port identifier in the mirrored packet, whether the transmitter of the data packet is user equipment comprises:
determining a port type of the receive port based on first information and the receive port identifier, wherein the first information comprises a port identifier of a port of each network device in a network and a corresponding port type, and the port type comprises a user-side port type and a network-device-side port type; and
if the port type of the receive port is the user-side port type, determining that the transmitter is user equipment; or
if the port type of the receive port is the network-device-side port type, determining that the transmitter is not user equipment.

8. The method according to claim 6 or 7, wherein before the receiving a mirrored packet sent by a network device, the method further comprises:
obtaining second information, wherein the second information comprises identifiers of a plurality of network devices in the network;
obtaining neighbor information of each of the plurality of network devices, wherein each piece of neighbor information comprises an identifier of a source network device, a source network device port identifier, and an identifier of a neighbor device, the source network device is a device that sends the neighbor information, the neighbor device is a device physically connected to the source network device, and the source network device port identifier indicates a port that is of the source network device and that is connected to the neighbor device; and
determining a port type of a port of each network device based on the second information and the neighbor information, wherein an identifier of a neighbor device connected to a port whose port type is the network-device-side port type is comprised in the second information, and an identifier of a neighbor device connected to a port whose port type is the user-side port type is not comprised in the second information.

9. The method according to claim 3, wherein the receiving a mirrored packet sent by a network device comprises:
receiving a plurality of mirrored packets, wherein the plurality of mirrored packets are from one or more network devices; and
the identifier of the transmitter comprises an IP address of the transmitter and a MAC address of the transmitter, and the determining, based on the identifier of the transmitter in the mirrored packet, whether the transmitter of the data packet is user equipment comprises:
if transmitter IP addresses carried in N mirrored packets in the plurality of mirrored packets are the same, none of transmitter MAC addresses carried in the N mirrored packets is comprised in second information, and network device identifiers carried in the N mirrored packets indicate a same network device, determining that the transmitter is user equipment, wherein the second information comprises identifiers of a plurality of network devices in a network.

10. The method according to claim 9, wherein the determining, based on the identifier of the transmitter in the mirrored packet, whether the transmitter of the data packet is user equipment further comprises:
if transmitter IP addresses carried in M mirrored packets in the plurality of mirrored packets are the same, none of transmitter MAC addresses carried in the M mirrored packets is comprised in the second information, and network device identifiers carried in the M mirrored packets indicate two or more network devices, determining, based on the receive port identifier in the mirrored packet, whether the transmitter of the data packet is user equipment.

11. The method according to claim 1, wherein the method further comprises:
querying user equipment access information based on the identifier of the transmitter, wherein the user equipment access information comprises access location information of at least one user equipment; and
if the user equipment access information comprises access location information of user equipment corresponding to the identifier of the transmitter, and stored access location information is inconsistent with the currently obtained access location information, updating the access location information that is of the user equipment corresponding to the identifier of the transmitter and that is in the user equipment access information.

12. The method according to any one of claims 1 to 11, wherein the data packet carries transport layer control information or application layer control information.

13. The method according to any one of claims 1 to 12, wherein the data packet is a tunnel packet, and the identifier of the transmitter is carried in an inner packet of the tunnel packet.

14. The method according to any one of claims 1 to 13, wherein the user equipment is a server, a terminal device, or a virtual machine.

15. A device access location obtaining apparatus, comprising:
a receiving unit, configured to receive a mirrored packet sent by a network device, wherein the mirrored packet is generated by the network device based on a received data packet, the mirrored packet comprises the data packet or partial content of the data packet, an identifier of the network device, and a receive port identifier, the data packet in the mirrored packet or the partial content of the data packet in the mirrored packet comprises an identifier of a transmitter of the data packet, and the receive port identifier indicates a receive port for the network device to receive the data packet; and
an access location obtaining unit, configured to determine, based on the mirrored packet, whether the transmitter of the data packet is user equipment, wherein
the access location obtaining unit is further configured to obtain access location information of the user equipment if it is determined that the transmitter is user equipment, wherein the access location information comprises the identifier of the transmitter, the identifier of the network device, and the receive port identifier.

16. The apparatus according to claim 15, wherein the access location obtaining unit is specifically configured to determine, based on the receive port identifier in the mirrored packet, whether the transmitter of the data packet is user equipment.

17. The apparatus according to claim 15, wherein the access location obtaining unit is specifically configured to determine, based on the identifier of the transmitter in the mirrored packet, whether the transmitter of the data packet is user equipment.

18. The apparatus according to claim 15, wherein a port type of the receive port is a user-side port type.

19. The apparatus according to claim 18, wherein the access location obtaining unit is specifically configured to determine, in response to the received mirrored packet, that the transmitter of the data packet is user equipment.

20. The apparatus according to claim 18, wherein the apparatus further comprises an analysis unit, configured to:
determine at least one network device in a network based on first information, wherein the first information comprises a port identifier of a port of each network device in the network and a corresponding port type, the port type comprises the user-side port type and a network-device-side port type, and each of the at least one network device comprises a port of the user-side port type; and
send indication information to the at least one network device, wherein the indication information indicates each of the at least one network device to generate a mirrored packet based on a data packet received by the port of the user-side interface type of each network device.

21. The apparatus according to claim 16, wherein the access location obtaining unit is specifically configured to:
determine a port type of the receive port based on first information and the receive port identifier, wherein the first information comprises a port identifier of a port of each network device in a network and a corresponding port type, and the port type comprises a user-side port type and a network-device-side port type; and
if the port type of the receive port is the user-side port type, determine that the transmitter is user equipment; or
if the port type of the receive port is the network-device-side port type, determine that the transmitter is not user equipment.

22. The apparatus according to claim 20 or 21, wherein the apparatus further comprises the analysis unit, specifically configured to:
obtain second information, wherein the second information comprises identifiers of a plurality of network devices in the network;
obtain neighbor information of each of the plurality of network devices, wherein each piece of neighbor information comprises an identifier of a source network device, a source network device port identifier, and an identifier of a neighbor device, the source network device is a device that sends the neighbor information, the neighbor device is a device physically connected to the source network device, and the source network device port identifier indicates a port that is of the source network device and that is connected to the neighbor device; and
determine a port type of a port of each network device based on the second information and the neighbor information, wherein an identifier of a neighbor device connected to a port whose port type is the network-device-side port type is comprised in the second information, and an identifier of a neighbor device connected to a port whose port type is the user-side port type is not comprised in the second information.

23. The apparatus according to claim 17, wherein the receiving unit is specifically configured to:
receive a plurality of mirrored packets, wherein the plurality of mirrored packets are from one or more network devices; and
the identifier of the transmitter comprises an IP address of the transmitter and a MAC address of the transmitter, and the access location obtaining unit is specifically configured to:
if transmitter IP addresses carried in N mirrored packets in the plurality of mirrored packets are the same, none of transmitter MAC addresses carried in the N mirrored packets is comprised in second information, and network device identifiers carried in the N mirrored packets indicate a same network device, determine that the transmitter is user equipment, wherein the second information comprises identifiers of a plurality of network devices in a network.

24. The apparatus according to claim 23, wherein the access location obtaining unit is specifically configured to:
if transmitter IP addresses carried in M mirrored packets in the plurality of mirrored packets are the same, none of transmitter MAC addresses carried in the M mirrored packets is comprised in the second information, and network device identifiers carried in the M mirrored packets indicate two or more network devices, determine, based on the receive port identifier in the mirrored packet, whether the transmitter of the data packet is user equipment.

25. The apparatus according to claim 15, wherein the apparatus further comprises:
an access location storage unit, configured to query user equipment access information based on the identifier of the transmitter, wherein the user equipment access information comprises access location information of at least one user equipment; and
the access location storage unit is further configured to: if the user equipment access information comprises access location information of user equipment corresponding to the identifier of the transmitter, and stored access location information is inconsistent with the currently obtained access location information, update the access location information that is of the user equipment corresponding to the identifier of the transmitter and that is in the user equipment access information.

26. The apparatus according to any one of claims 15 to 25, wherein the data packet carries transport layer control information or application layer control information.

27. The apparatus according to any one of claims 15 to 26, wherein the data packet is a tunnel packet, and the identifier of the transmitter is carried in an inner packet of the tunnel packet.

28. The apparatus according to any one of claims 15 to 27, wherein the user equipment is a server, a terminal device, or a virtual machine.

29. A computer storage medium, comprising computer instructions, wherein when the computer instructions are run on a computer, the computer is enabled to perform the method according to any one of claims 1 to 14.

30. A computer program product, wherein when the computer program product runs on a computer, the computer is enabled to perform the method according to any one of claims 1 to 14.
